# EUROPÄISCHE PATENTSCHRIFT

(11) **EP 3 560 847 B1**
(45) Veröffentlichungstag und Bekanntmachung des Hinweises auf die Patenterteilung: **25.11.2020**
(21) Anmeldenummer: 18168648.6
(22) Anmeldetag: 23.04.2018
(51) Int. Cl.: B65B 35/18, B65G 47/91

(54) **ÜBERGABEEINHEIT UND VERFAHREN ZUM TRANSFERIEREN VON BLISTERPACKUNGEN**
TRANSFER UNIT AND METHOD FOR TRANSFERRING BLISTER PACKS
UNITÉ DE TRANSFERT ET PROCÉDÉ DE TRANSFERT DES PLAQUETTES THERMOFORMÉES

(43) Veröffentlichungstag der Anmeldung: 30.10.2019
(73) Patentinhaber: Uhlmann Pac-Systeme GmbH & Co. KG, 88471 Laupheim (DE)
(72) Erfinder: Hähnel, Bernd, 76297 Stutensee (DE); Binder, Sebastian, 88477 Schwendi (DE)
(74) Vertreter: Wächter, Jochen

(56) Entgegenhaltungen:
- EP-A1- 2 840 030
- WO-A1-2014/181307
- DE-A1-102004 043 332
- DE-A1-102006 047 925

## Beschreibung

Die vorliegende Erfindung betrifft eine Übergabeeinheit und ein Verfahren zum Transferieren von Blisterpackungen.

Blisterpackungen werden häufig in der pharmazeutischen Industrie bei der Verpackung von Medikamenten verwendet. Hierbei wird zunächst in einer Folienbahn eine Vielzahl von Näpfen gebildet, in welche Produkte, wie etwa Dragees oder Tabletten, eingebracht werden. Anschließend wird die Folienbahn mit den befüllten Näpfen mit einer Deckfolie versiegelt und einer Stanzstation zugeführt, in der die jeweiligen Blisterpackungen aus der Folienbahn ausgestanzt werden.

In einer weiteren Phase des Verpackungsprozesses werden die ausgestanzten Blisterpackungen mit Hilfe einer Transferiervorrichtung an ein Fördermittel übertragen. Die Blisterpackungen werden dabei in Stapeln in jeweiligen Aufnahmen des Fördermittels abgelegt. Abschließend werden die auf dem Fördermittel angeordneten Stapel von Blisterpackungen einer Verpackungsstation zugeführt, in der die Stapel von Blisterpackungen in entsprechende Verpackungen, wie etwa Faltschachteln, eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

Dokument EP-A-2 840 030 beschreibt eine Vorrichtung zum Transferieren von Blisterpackungen, die zwei Saugerarme aufweist. Die Saugerarme sind jeweils um zwei senkrecht zueinander verlaufende Achsen drehbar, so dass eine kombinierte Drehbewegung entsteht. Mit den Saugerarmen werden Blisterpackungen wechselweise von einer Stanzstation zu einem Fördermittel transferiert. Die Blisterpackungen werden mittels die beiden Saugerarme von dergleichen Aufnahmeposition zu dergleichen Abgabeposition transferiert.

Der Erfindung liegt die Aufgabe zugrunde, eine verbesserte Übergabeeinheit und ein Verfahren zum Transferieren von Blisterpackungen zu schaffen, wobei der Transfer von Blisterpackungen besonders effizient, präzise und schnell erfolgt.

Diese Aufgabe wird durch die Merkmale des Anspruchs 1, des Anspruchs 6, des Anspruchs 16 und des Anspruchs 19 gelöst.

Eine erfindungsgemäße Übergabeeinheit zum Transferieren von Blisterpackungen umfasst einen ersten Saugerarm, der bewegbar ist zwischen einer ersten Aufnahmestellung zum Aufnehmen einer ersten Blisterpackung von einer ersten Aufnahmeposition und einer ersten Abgabestellung zum Ablegen der ersten Blisterpackung in einer Abgabeposition, und einen zweiten Saugerarm, der bewegbar ist zwischen einer zweiten Aufnahmestellung zum Aufnehmen einer zweiten Blisterpackung von einer zweiten Aufnahmeposition und einer zweiten Abgabestellung zum Ablegen der zweiten Blisterpackung in derselben Abgabeposition. Der erste und der zweite Saugerarm sind zu beiden Seiten einer Längsmittelebene der Übergabeeinheit angeordnet, wobei jeder Saugerarm ein erstes Segment und ein zweites Segment aufweist. Das erste Segment jedes Saugerarms ist um eine zugehörige erste Achse, die senkrecht zur Längsmittelebene verläuft, drehbar befestigt, und das erste Segment jedes Saugerarms weist einen Abschnitt auf, an dem das zweite Segment drehbar um eine zur ersten Achse im Wesentlichen senkrecht verlaufende ortsveränderliche zweite Achse befestigt ist, wobei an dem zweiten Segment eine Saugvorrichtung zum Ansaugen und Halten einer Blisterpackung angeordnet ist. Die Saugerarme sind derart ausgestaltet und angesteuert, dass die Bewegung der Saugerarme von der ersten oder zweiten Aufnahmestellung zur ersten oder zweiten Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Die Saugerarme sind derart gestaltet und angesteuert, dass die Blisterpackungen in der ersten und zweiten Aufnahmeposition von den Saugvorrichtungen des ersten und zweiten Saugerarms an einer ebenen Fläche angesaugt und an der Abgabeposition mit der ebenen Fläche nach oben abgelegt werden, wobei die erste und zweite Aufnahmeposition bezüglich der Längsmittelebene nach außen versetzt angeordnet sind und die Abgabeposition im Bereich der Längsmittelebene angeordnet ist. Die zweite Achse des ersten Saugerarms ist derart angeordnet, dass sich die zweite Achse des ersten Saugerarms während der ersten Drehbewegung des ersten Segments des ersten Saugerarms in einer ersten Ebene bewegt, die die erste Aufnahmeposition oder deren seitliche Projektion in einer ersten geraden Linie schneidet, die seitlich versetzt zur Mitte der ersten Aufnahmeposition ist. Die zweite Achse des zweiten Saugerarms ist derart angeordnet, dass sich die zweite Achse des zweiten Saugerarms während der ersten Drehbewegung des ersten Segments des zweiten Saugerarms in einer zweiten Ebene bewegt, die die zweite Aufnahmeposition oder deren seitliche Projektion in einer zweiten geraden Linie schneidet, die seitlich versetzt zur Mitte der zweiten Aufnahmeposition ist.

Auf diese Weise wird eine zuverlässige Übergabe von Blisterpackungen gewährleistet, bei der auf einfache Weise und mit hohem Durchsatz Blisterpackungen aus zwei Linien auf eine Linie eingeweicht werden.

Die Saugerarme sind vorzugsweise derart gestaltet und angesteuert, dass die Blisterpackungen an der ersten und zweiten Aufnahmeposition von den Saugvorrichtungen des ersten und zweiten Saugerarms von oben aufgenommen und ebenfalls von oben in die Abgabeposition abgelegt werden. Durch die Aufnahme der Blisterpackungen von oben können die Blisterpackungen an den Aufnahmepositionen flach liegen. Die Abgabe der Blisterpackungen in der Abgabeposition von oben gewährleistet einen möglichst flexiblen Freigabezeitpunkt der Blisterpackungen durch die Saugvorrichtungen.

Bevorzugt ist das zweite Segment des ersten oder zweiten Saugerarms in der ersten oder zweiten Aufnahmestellung jeweils bezüglich der Längsmittelebene nach außen geschwenkt, und das zweite Segment des ersten oder zweiten Saugerarms ist in der ersten oder zweiten Abgabestellung jeweils bezüglich der Längsmittelebene nach innen geschwenkt. Durch diese Gestaltung wird der seitliche Versatz der Blisterpackungen während der Übergabe auf konstruktiv einfache Weise realisiert.

Es ist bevorzugt, dass die zweiten Segmente und somit die an den Saugvorrichtungen gehaltenen Blisterpackungen eine Drehbewegung um die zweite Achse von im Wesentlichen 180° ausführen, wenn sich die Saugerarme von der ersten oder zweiten Aufnahmestellung zur ersten oder zweiten Abgabestellung oder umgekehrt bewegen. Diese Drehbewegung sorgt auf einfache Weise dafür, dass sich die Blisterpackungen während der Übergabe um 180° um ihre Mittelpunkte drehen. Dies wiederum gewährleistet, dass die Blisterpackungen mit der Deckfolienseite nach oben abgelegt werden können.

Schließlich ist es bevorzugt, dass die ersten Segmente eine Drehbewegung um die erste Achse von 60° bis 180°, mehr bevorzugt 120° bis 180° ausführen, wenn sich die Saugerarme von der ersten oder zweiten Aufnahmestellung zur ersten oder zweiten Abgabestellung oder umgekehrt bewegen. Während die Abgabeposition in der Regel horizontal angeordnet ist, können die Aufnahmepositionen horizontal, vertikal oder auch schräg angeordnet sein. Der angegebene Winkelbereich deckt alle Möglichkeiten der Anordnung der Aufnahmepositionen ab. Außerdem ist es denkbar, dass die Saugvorrichtungen vom zweiten Segment der Saugerarme jeweils schräg abragen, sodass das erste Segment lediglich über einen geringeren Winkelbereich verschwenkt werden muss als der Winkel, der von den Blisterpackungen von den Aufnahmepositionen zur Abgabeposition zurückzulegen ist.

Eine andere erfindungsgemäße Übergabeeinheit zum Transferieren von Blisterpackungen umfasst einen ersten Saugerarm, der bewegbar ist zwischen einer ersten Aufnahmestellung zum Aufnehmen einer ersten Blisterpackung von einer Aufnahmeposition und einer ersten Abgabestellung zum Ablegen der ersten Blisterpackung in einer ersten Abgabeposition, und einen zweiten Saugerarm, der bewegbar ist zwischen einer zweiten Aufnahmestellung zum Aufnehmen einer zweiten Blisterpackung von der selben Aufnahmeposition und einer zweiten Abgabestellung zum Ablegen der zweiten Blisterpackung in einer zweiten Abgabeposition. Der erste und der zweite Saugerarm sind zu beiden Seiten einer Längsmittelebene der Übergabeeinheit angeordnet, wobei jeder Saugerarm ein erstes Segment und ein zweites Segment aufweist. Das erste Segment jedes Saugerarms ist um eine zugehörige erste Achse, die senkrecht zur Längsmittelebene verläuft, drehbar befestigt. Das erste Segment jedes Saugerarms weist einen Abschnitt auf, an dem das zweite Segment drehbar um eine zur ersten Achse im Wesentlichen senkrecht verlaufende ortsveränderliche zweite Achse befestigt ist. An dem zweiten Segment ist eine Saugvorrichtung zum Ansaugen und Halten einer Blisterpackung angeordnet. Die Saugerarme sind derart ausgestaltet und angesteuert, dass die Bewegung der Saugerarme von der ersten oder zweiten Aufnahmestellung zur ersten oder zweiten Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Die Saugerarme sind derart ausgestaltet und angesteuert, dass die Blisterpackungen in der Aufnahmeposition von den Saugvorrichtungen des ersten und zweiten Saugerarms an einer ebenen Fläche angesaugt und an der ersten und zweiten Abgabeposition mit der ebenen Fläche nach oben abgelegt werden, wobei die Aufnahmeposition im Bereich der Längsmittelebene angeordnet ist und die erste und zweite Abgabeposition bezüglich der Längsmittelebene nach außen versetzt angeordnet sind. Die zweite Achse des ersten Saugerarms ist derart angeordnet, dass sich die zweite Achse des ersten Saugerarms während der ersten Drehbewegung des ersten Segments des ersten Saugerarms in einer ersten Ebene bewegt, die die erste Abgabeposition oder deren seitliche Projektion in einer ersten geraden Linie schneidet, die seitlich versetzt zur Mitte der ersten Abgabeposition ist. Die zweite Achse des zweiten Saugerarms ist derart angeordnet, dass sich die zweite Achse des zweiten Saugerarms während der ersten Drehbewegung des ersten Segments des zweiten Saugerarms in einer zweiten Ebene bewegt, die die zweite Abgabeposition oder deren seitliche Projektion in einer zweiten geraden Linie schneidet, die seitlich versetzt zur Mitte der zweiten Abgabeposition ist.

Auf diese Weise wird eine zuverlässige Übergabe von Blisterpackungen gewährleistet, bei der auf einfache Weise und mit hohem Durchsatz Blisterpackungen aus einer Linie auf zwei Linien verteilt werden.

Bevorzugt sind die Saugerarme derart ausgestaltet und angesteuert, dass die Blisterpackungen an der Aufnahmeposition von den Saugvorrichtungen des ersten und zweiten Saugerarms von oben aufgenommen und ebenfalls von oben in die erste und zweite Abgabeposition abgelegt werden. Durch die Aufnahme der Blisterpackungen von oben können die Blisterpackungen an der Aufnahmeposition flach liegen. Die Abgabe der Blisterpackungen in die Abgabepositionen von oben gewährleistet einen möglichst flexiblen Freigabezeitpunkt der Blisterpackungen durch die Saugvorrichtungen.

In einer bevorzugten Ausgestaltung ist das zweite Segment des ersten oder zweiten Saugerarms in der ersten oder zweiten Aufnahmestellung jeweils bezüglich der Längsmittelebene nach innen geschwenkt, und das zweite Segment des ersten oder zweiten Saugerarms ist in der ersten oder zweiten Abgabestellung jeweils bezüglich der Längsmittelebene nach außen geschwenkt. Durch diese Gestaltung wird der seitliche Versatz der Blisterpackungen während der Übergabe auf konstruktiv einfache Weise realisiert.

Es ist bevorzugt, dass die zweiten Segmente und somit die an den Saugvorrichtungen gehaltenen Blisterpackungen eine Drehbewegung um die zweite Achse von im Wesentlichen 180° ausführen, wenn sich die Saugerarme von der ersten oder zweiten Aufnahmestellung zur ersten oder zweiten Abgabestellung oder umgekehrt bewegen. Diese Drehbewegung sorgt auf einfache Weise dafür, dass sich die Blisterpackungen während der Übergabe um 180° um ihre Mittelpunkte drehen. Dies wiederum gewährleistet, dass die Blisterpackungen mit der Deckfolienseite nach oben abgelegt werden können.

Vorzugsweise führen die ersten Segmente eine Drehbewegung um die erste Achse von 60° bis 180°, mehr bevorzugt 120° bis 180° aus, wenn sich die Saugerarme von der ersten oder zweiten Aufnahmestellung zur ersten oder zweiten Abgabestellung oder umgekehrt bewegen. Während die Abgabepositionen in der Regel horizontal angeordnet sind, kann die Aufnahmeposition horizontal, vertikal oder auch schräg angeordnet sein. Der angegebene Winkelbereich deckt alle Möglichkeiten der Anordnung der Aufnahmeposition ab. Außerdem ist es denkbar, dass die Saugvorrichtungen vom zweiten Segment der Saugerarme jeweils schräg abragen, sodass das erste Segment lediglich über einen geringeren Winkelbereich verschwenkt werden muss als der Winkel, der von den Blisterpackungen von der Aufnahmeposition zu den Abgabepositionen zurückzulegen ist.

In einer bevorzugten Ausgestaltung sind der erste und der zweite Saugerarm derart angesteuert, dass der erste und zweite Saugerarm gegenläufige hin- und hergehende Schwenkbewegungen ausführen. Auf diese Weise kann der Durchsatz der Übergabeeinheit erhöht werden.

Zur Anpassung an verschiedene Formate der Blisterpackungen und des gewünschten seitlichen Versatzes der Blisterpackungen bei der Übergabe können die Saugerarme parallel zur ersten Achse verschiebbar gelagert sein.

Es ist bevorzugt, dass die Saugvorrichtung jedes Saugerarms mindestens einen Saugkopf umfasst, der mittels mindestens eines Trägerarms am zweiten Segment befestigt ist. Besonders bevorzugt ist der mindestens eine Trägerarm starr an dem zweiten Segment befestigt.

Um den vom ersten Segment zu überstreichenden Winkelbereich zu reduzieren, kann der mindestens eine Trägerarm in der ersten oder zweiten Aufnahmestellung und in der ersten oder zweiten Abgabestellung vom zweiten Segment schräg nach unten abragen.

Ein erfindungsgemäßes Verfahren zum Transferieren von Blisterpackungen von einer ersten und zweiten Aufnahmeposition zu einer gemeinsamen Abgabeposition mittels einer Übergabeeinheit umfasst folgende Schritte:
- Bereitstellen einer ersten und einer zweiten Blisterpackung in einer ersten und einer zweiten Aufnahmeposition, wobei die Blisterpackungen in der ersten und zweiten Aufnahmeposition in einer Reihe, die quer zu einer Längsmittelebene der Übergabeeinheit verläuft, nebeneinander angeordnet sind;
- Aufnehmen der ersten Blisterpackung in der ersten Aufnahmeposition, Bewegen der ersten Blisterpackung und Ablegen der ersten Blisterpackung in der Abgabeposition, wobei die erste Blisterpackung in der Abgabeposition von oben abgelegt wird, wobei die erste Blisterpackung in der ersten Aufnahmeposition bezüglich der Längsmittelebene nach außen versetzt angeordnet ist, und wobei die erste Blisterpackung in der Abgabeposition im Vergleich zur ersten Aufnahmeposition um 180° um ihren Mittelpunkt gedreht abgelegt wird;
- Aufnehmen der zweiten Blisterpackung in der zweiten Aufnahmeposition, Bewegen der zweiten Blisterpackung und Ablegen der zweiten Blisterpackung in der Abgabeposition, wobei die zweite Blisterpackung in der Abgabeposition von oben abgelegt wird, wobei die zweite Blisterpackung in der zweiten Aufnahmeposition bezüglich der Längsmittelebene nach außen versetzt angeordnet ist, und wobei die zweite Blisterpackung in der Abgabeposition im Vergleich zur zweiten Aufnahmeposition um 180° um ihren Mittelpunkt gedreht abgelegt wird.

Auf diese Weise wird eine zuverlässige Übergabe von Blisterpackungen gewährleistet, bei der auf einfache Weise und mit hohem Durchsatz Blisterpackungen aus zwei Linien auf eine Linie eingeweicht werden.

In einer bevorzugten Ausführungsform werden die Blisterpackungen an der ersten und zweiten Aufnahmeposition von oben aufgenommen, und die Blisterpackungen sind in der ersten und zweiten Aufnahmeposition und in der Abgabeposition jeweils mit derselben Seite nach oben angeordnet. Durch diese Maßnahmen werden das Aufnehmen und das Abgeben der Blisterpackungen erleichtert. Außerdem können auf diese Weise Saugvorrichtungen zum Aufnehmen und Halten der Blisterpackungen in der Übergabeeinheit verwendet werden.

Es ist bevorzugt, dass die Abgabeposition im Bereich der Längsmittelebene angeordnet ist, und dass die erste und zweite Blisterpackung während des Bewegens von der ersten und zweiten Aufnahmeposition zur Abgabeposition einen entgegengesetzten seitlichen Versatz quer zur Längsmittelebene vollziehen. Auf diese Weise kann der seitliche Versatz jeder Blisterpackung auf die Hälfte des Abstands zwischen den Aufnahmepositionen reduziert werden. Ebenso ist es aber möglich, dass lediglich eine Blisterpackung während des Bewegens von der ersten oder zweiten Aufnahmeposition zur Abgabeposition einen seitlichen Versatz vollzieht, während die andere Blisterpackung ohne seitlichen Versatz transferiert wird.

Ein weiteres erfindungsgemäßes Verfahren zum Transferieren von Blisterpackungen von einer gemeinsamen Aufnahmeposition zu einer ersten und zweiten Abgabeposition mittels einer Übergabeeinheit umfasst folgende Schritte:
- Bereitstellen einer ersten Blisterpackung in der Aufnahmeposition;
- Aufnehmen der ersten Blisterpackung in der Aufnahmeposition, Bewegen der ersten Blisterpackung und Ablegen der ersten Blisterpackung in der ersten Abgabeposition, wobei die erste Blisterpackung in der ersten Abgabeposition von oben abgelegt wird, wobei die erste Blisterpackung in der ersten Abgabeposition bezüglich einer Längsmittelebene der Übergabeeinheit nach außen versetzt angeordnet ist, und wobei die erste Blisterpackung in der ersten Abgabeposition im Vergleich zur Aufnahmeposition um 180° um ihren Mittelpunkt gedreht abgelegt wird;

- Bereitstellen der zweiten Blisterpackung in der Aufnahmeposition;
- Aufnehmen der zweiten Blisterpackung in der Aufnahmeposition, Bewegen der zweiten Blisterpackung und Ablegen der zweiten Blisterpackung in der zweiten Abgabeposition, wobei die zweite Blisterpackung in der zweiten Abgabeposition von oben abgelegt wird, wobei die zweite Blisterpackung in der zweiten Abgabeposition bezüglich der Längsmittelebene nach außen versetzt angeordnet ist, wobei die zweite Blisterpackung in der zweiten Abgabeposition im Vergleich zur Aufnahmeposition um 180° um ihren Mittelpunkt gedreht abgelegt wird, und wobei die Blisterpackungen in der ersten und zweiten Abgabeposition in einer Reihe, die quer zur Längsmittelebene verläuft, nebeneinander angeordnet sind.

Auf diese Weise wird eine zuverlässige Übergabe von Blisterpackungen gewährleistet, bei der auf einfache Weise und mit hohem Durchsatz Blisterpackungen aus einer Linie auf zwei Linien verteilt werden.

In einer bevorzugten Ausführungsform werden die Blisterpackungen an der Aufnahmeposition von oben aufgenommen, und die Blisterpackungen sind in der Aufnahmeposition und in der ersten und zweiten Abgabeposition jeweils mit derselben Seite nach oben angeordnet. Durch diese Maßnahmen werden das Aufnehmen und das Abgeben der Blisterpackungen erleichtert. Außerdem können auf diese Weise Saugvorrichtungen zum Aufnehmen und Halten der Blisterpackungen in der Übergabeeinheit verwendet werden.

Es ist bevorzugt, dass die Aufnahmeposition im Bereich der Längsmittelebene angeordnet ist, und dass die erste und zweite Blisterpackung während des Bewegens von der Aufnahmeposition zur ersten und zweiten Abgabeposition einen entgegengesetzten seitlichen Versatz quer zur Längsmittelebene vollziehen. Auf diese Weise kann der seitliche Versatz jeder Blisterpackung auf die Hälfte des Abstands zwischen den Abgabepositionen reduziert werden. Ebenso ist es aber möglich, dass lediglich eine Blisterpackung während des Bewegens von der Aufnahmeposition zu den Abgabepositionen einen seitlichen Versatz vollzieht, während die andere Blisterpackung ohne seitlichen Versatz transferiert wird.

Schließlich ist es bevorzugt, dass die erste und zweite Blisterpackung in der ersten und zweiten Aufnahmeposition oder in der gemeinsamen Aufnahmeposition mit der Deckfolie nach oben angeordnet sind. Außerdem ist es bevorzugt, wenn die erste und zweite Blisterpackung in der gemeinsamen Abgabeposition oder in der ersten und zweiten Abgabeposition mit der Deckfolie nach oben angeordnet sind. Diese Gestaltung ist bei Verwendung von Sauggreifern besonders geeignet.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer Vorrichtung zum Transferieren von Blisterpackungen mit einer erfindungsgemäßen Übergabeeinheit;
- Fig. 2: ist eine Draufsicht auf die Vorrichtung aus Fig. 1;
- Fig. 3 bis 6: sind schematische Perspektivansichten der Vorrichtung aus Fig. 1, die unterschiedliche Stadien des Übergabeprozesses darstellen;
- Fig. 7: ist eine schematische Perspektivansicht von zwei Saugerarmen, die bei der Vorrichtung gemäß Fig. 1 in der erfindungsgemäßen Übergabeeinheit verwendet werden;
- Fig. 8: ist eine schematische Perspektivansicht der wesentlichen Antriebskomponenten eines Saugerarms aus Fig. 7;
- Fig. 9: ist eine Querschnittsansicht zur Darstellung des inneren Aufbaus eines Saugerarms aus Fig. 7;
- Fig. 10: ist eine schematische Perspektivansicht eines Mechanismus zur Anpassung der Drehbewegung des zweiten Segments des Saugerarms aus Fig. 9 um die zweite Achse ;
- Fig. 11: ist eine schematische Perspektivansicht einer Variante einer erfindungsgemäßen Übergabeeinheit, die bei der Vorrichtung gemäß Fig. 1 verwendet werden kann;
- Fig. 12: ist eine Draufsicht auf die Vorrichtung aus Fig. 1, wobei als erste Übergabeeinheit die Übergabeeinheit aus Fig. 11 verwendet wird;
- Fig. 13: ist eine schematische Perspektivansicht der Übergabeeinheit aus Fig. 11 in einem anderen Stadium des Übergabeprozesses;
- Fig. 14: ist eine schematische Perspektivansicht der Saugerarme der Übergabeeinheit aus Fig. 11;
- Fig. 15: eine schematische Perspektivansicht der wesentlichen Antriebskomponenten eines Saugerarms aus Fig. 14;
- Fig. 16: ist eine Querschnittsansicht zur Darstellung des inneren Aufbaus eines Saugerarms aus Fig. 14; und
- Fig. 17: ist eine schematische Perspektivansicht eines Mechanismus zum Anpassen der Drehbewegung des zweiten Segments des Saugerarms aus Fig. 16 um die zweite Achse.

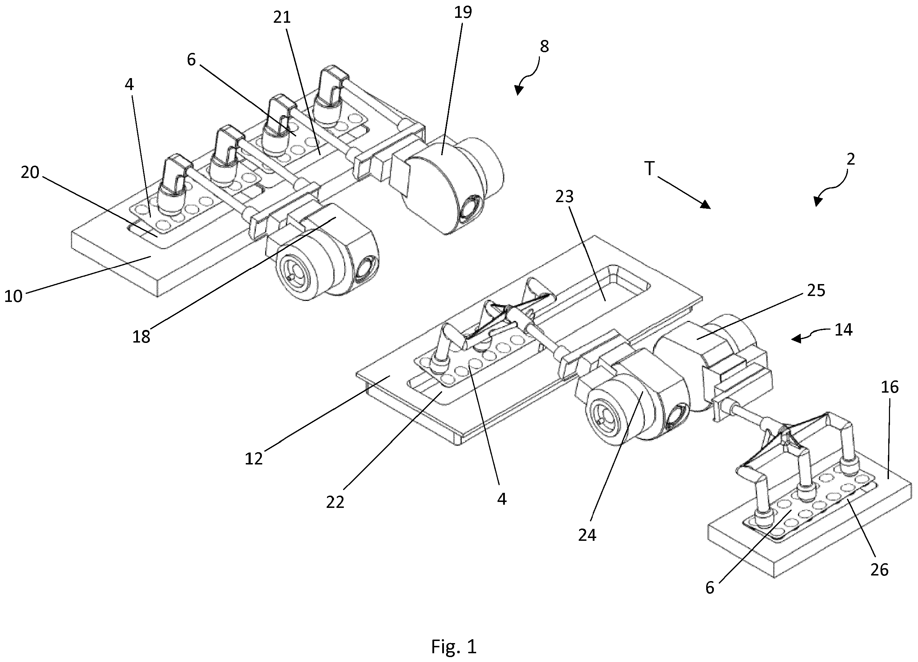

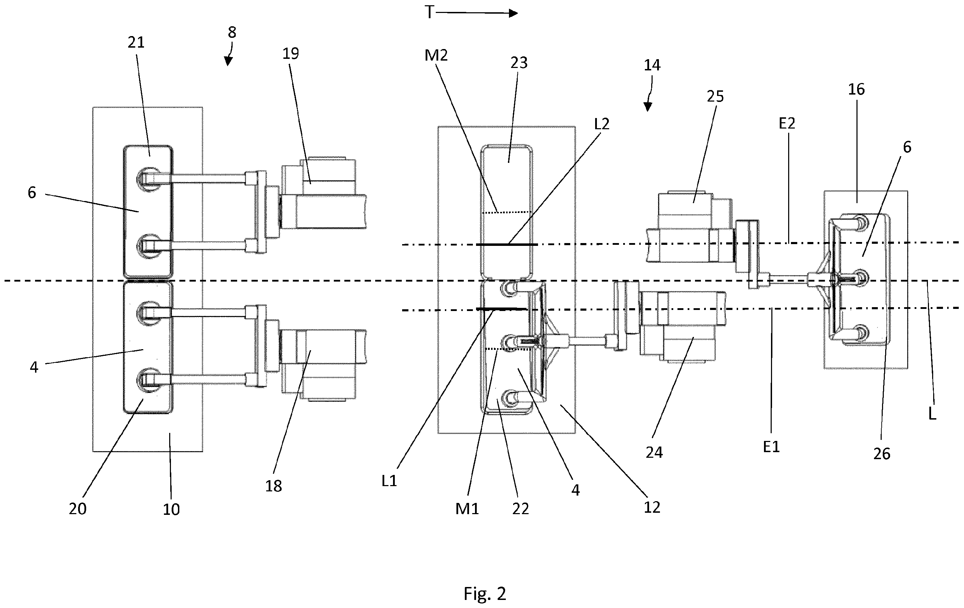

Fig. 1 bis 6 zeigt eine Vorrichtung 2 zum Transferieren von Blisterpackungen 4, 6. In Fig. 1 und Fig. 3 bis 6 ist die Vorrichtung 2 zum Transferieren von Blisterpackungen 4, 6 in verschiedenen Stadien des Übergabeprozesses dargestellt. Fig. 2 ist eine Draufsicht auf die Vorrichtung 2.

Die Vorrichtung 2 zum Transferieren von Blisterpackungen 4, 6 umfasst eine erste Übergabeeinheit 8, die die Blisterpackungen 4, 6 von einer Stanzstation 10 zu einer Zwischenablage 12 übergibt, sowie eine zweite Übergabeeinheit 14, die die Blisterpackungen 4, 6 von der Zwischenablage 12 zu einem Fördermittel 16 übergibt. Die Transferrichtung der Blisterpackungen 4, 6 ist in den Figuren durch den Pfeil T gekennzeichnet.

Die Stanzstation 10, die Zwischenablage 12 und das Fördermittel 16 sind in den Figuren lediglich schematisch dargestellt. Üblicherweise werden im Bereich der Stanzstation 10 die Blisterpackungen 4, 6 unmittelbar nach dem Stanzvorgang bereitgestellt. Ebenso ist es jedoch möglich, dass im Ausgangsbereich der Stanzstation 10 ein Transportmittel (nicht dargestellt) vorgesehen ist, das die Blisterpackungen 4, 6 nach dem Stanzvorgang weiter transportiert, bis sie von der ersten Übergabeeinheit 8 ergriffen werden. Ein solches Transportmittel bewegt sich vorzugsweise getaktet und in Transferrichtung T. Schließlich ist es auch möglich, dass die Blisterpackungen 4, 6 nach dem Stanzvorgang zunächst in einem Zwischenspeicher (nicht dargestellt) gespeichert werden, aus dem die Übergabeeinheit 8 jeweils die oben bzw. vorne liegende Blisterpackung 4, 6 entnimmt.

Das Fördermittel 16 bewegt sich vorzugsweise in Transferrichtung T. Das Fördermittel 16 kann als eine umlaufende Packgutkette ausgebildet sein, die kontinuierlich oder vorzugsweise getaktet bewegt wird. Ebenso ist es denkbar, dass das Fördermittel 16 als ein Linearmotorsystem ausgebildet ist. Wenn das Fördermittel 16 getaktet bewegt wird oder wenn die einzelnen Schlitten des umlaufenden Linearmotorsystems an der Position, an der ihnen die Blisterpackungen 4, 6 zugeführt werden, während der Übergabe stillstehen, können in den Fächern des Fördermittels 16 Stapel von zwei oder mehr aufeinander liegenden Blisterpackungen 4, 6 gebildet werden. Es ist auch denkbar, die Blisterpackungen 4, 6 nicht direkt an das Fördermittel 16, sondern zunächst an einen Speicher (nicht dargestellt) zu übergeben.

Die erste Übergabeeinheit 8 weist einen ersten Saugerarm 18 und einen zweiten Saugerarm 19 auf. Der erste Saugerarm 18 und der zweite Saugerarm 19 sind quer zur Transferrichtung T (siehe Fig. 2) nebeneinander zu beiden Seiten der Längsmittelebene L der Vorrichtung 2 bzw. der Übergabeeinheit 8 angeordnet. Der erste Saugerarm 18 ist bewegbar zwischen einer Aufnahmestellung, die in Fig. 2 dargestellt ist, zum Aufnehmen einer ersten Blisterpackung 4 von einer ersten Bereitstellposition 20 in der Stanzstation 10 und einer Abgabestellung zum Ablegen der ersten Blisterpackung 4 in einer ersten Zwischenablageposition 22 auf der Zwischenablage 12.

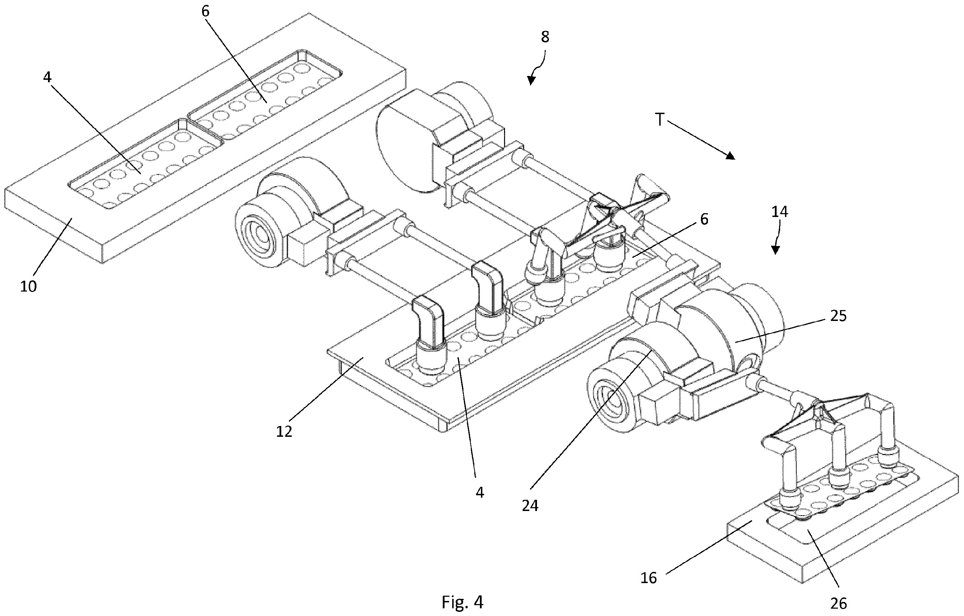

Ebenso ist der zweite Saugerarm 19 bewegbar zwischen einer Aufnahmestellung zum Aufnehmen einer zweiten Blisterpackung 6 von einer zweiten Bereitstellposition 21 (siehe Fig. 2) und einer Abgabestellung zum Ablegen der zweiten Blisterpackung 6 in einer zweiten Zwischenablageposition 23 auf der Zwischenablage 12. Die Abgabestellungen des ersten und zweiten Saugerarms 18, 19 der ersten Übergabeeinheit 8 sind in Fig. 4 dargestellt.

In der hier dargestellten bevorzugten Ausführungsform sind die Saugerarme 18, 19 spiegelsymmetrisch zur Längsmittelebene L ausgebildet und so angesteuert, dass sie eine synchrone Bewegung von der Aufnahmestellung zur Abgabestellung und zurück ausführen. Auf diese Weise werden die Blisterpackungen 4, 6 von den zwei Bereitstellpositionen 20, 21 in der Stanzstation 10 gleichzeitig von der ersten Übergabeeinheit 8 ergriffen und ebenfalls gleichzeitig in die beiden Zwischenablagepositionen 22, 23 auf der Zwischenablage 12 abgelegt. Neben der dargestellten Ausführungsform existieren viele weitere Möglichkeiten der Ausgestaltung der ersten Übergabeeinheit 8. Beispielsweise ist es denkbar, beide Blisterpackungen 4, 6 gleichzeitig mittels eines einzigen Saugerarms zu übergeben. Ebenso ist es denkbar, anstelle der Saugerarme 18, 19 Greifvorrichtungen einzusetzen. Schließlich ist es auch möglich, die beiden Blisterpackungen 4, 6 nicht gleichzeitig, sondern zeitlich versetzt zu übergeben.

Die erfindungsgemäße zweite Übergabeeinheit 14 weist einen ersten Saugerarm 24 und einen zweiten Saugerarm 25 auf, die zu beiden Seiten der Längsmittelebene L der Vorrichtung 2 bzw. der Übergabeeinheit 14 in einer Reihe nebeneinander angeordnet sind. Der erste Saugerarm 24 ist bewegbar zwischen einer Aufnahmestellung (siehe Fig. 2) zum Aufnehmen der ersten Blisterpackung 4 von der ersten Zwischenablageposition 22 auf der Zwischenablage 12 und einer Abgabestellung (die zeitlich kurz nach der in Fig. 4 dargestellten Position erreicht wird) zum Ablegen der ersten Blisterpackung 4 in einer Endablageposition 26 auf dem Fördermittel 16.

Der zweite Saugerarm 25 der zweiten Übergabeeinheit 14 ist bewegbar zwischen einer Aufnahmestellung (die zeitlich kurz nach der in Fig. 4 dargestellten Position erreicht wird) zum Aufnehmen der zweiten Blisterpackung 6 von der zweiten Zwischenablageposition 23 auf der Zwischenablage 12 und einer Abgabestellung (siehe Fig. 2) zum Ablegen der zweiten Blisterpackung 6 in derselben Endablageposition 26, in der der erste Saugerarm 24 die ersten Blisterpackungen 4 ablegt.

Die beiden Saugerarme 24, 25 sind vorzugsweise spiegelsymmetrisch bezüglich der Längsmittelebene L der Vorrichtung 2 angeordnet und aufgebaut. Die beiden Saugerarme 24, 25 führen gegenläufige hin- und hergehende Schwenkbewegungen aus. Wenn der erste Saugerarm 24 sich in der Aufnahmestellung befindet, befindet sich der zweite Saugerarm 25 in seiner Abgabestellung oder zumindest in der Nähe der Abgabestellung. Wenn sich der erste Saugerarm 24 in der Abgabestellung befindet, befindet sich der zweite Saugerarm 25 in seiner Aufnahmestellung oder zumindest in der Nähe der Aufnahmestellung. Die Aufnahmestellung des ersten Saugerarms 24 unterscheidet sich räumlich von der Aufnahmestellung des zweiten Saugerarms 25. Ebenso unterscheidet sich die Abgabestellung des ersten Saugerarms 24 von der Abgabestellung des zweiten Saugerarms 25 aufgrund der Spiegelsymmetrie der Saugerarme 24, 25 bezüglich der Längsmittelebene L.

Die erste und zweite Bereitstellposition 20, 21 in der Stanzstation 10, die erste und zweite Zwischenablageposition 22, 23 auf der Zwischenablage 12 und die gemeinsame Endablageposition 26 auf dem Fördermittel 16 sind jeweils vorzugsweise in der Form der zu übergebenden Blisterpackungen 4, 6 ausgebildet. Bei herkömmlichen Blisterpackungen 4, 6 werden die genannten Positionen somit im Wesentlichen eine rechteckförmige Gestalt aufweisen. In der dargestellten Ausführungsform sind die oben genannten Positionen jeweils derart angeordnet, dass sich die längere Seite der Positionen quer zur Transferrichtung T erstreckt. Wie aus Fig. 2 ersichtlich ist, sind die erste und zweite Bereitstellposition 20, 21 bezüglich der Längsmittelebene L der Vorrichtung 2 nach außen versetzt angeordnet. Die erste und zweite Zwischenablageposition 22, 23 sind bezüglich der Längsmittelebene L nach außen versetzt angeordnet, vorzugsweise in einer bezüglich der Längsmittelebene L identischen Anordnung wie die erste und zweite Bereitstellposition 20, 21. Die gemeinsame Endablageposition 26 ist hingegen im Bereich der Längsmittelebene L angeordnet. In der hier dargestellten bevorzugten Ausführungsform ist die gemeinsame Endablageposition 26 derart symmetrisch zur Längsmittelebene L angeordnet, dass die Längsmittelebene L die Endablageposition 26 mittig schneidet.

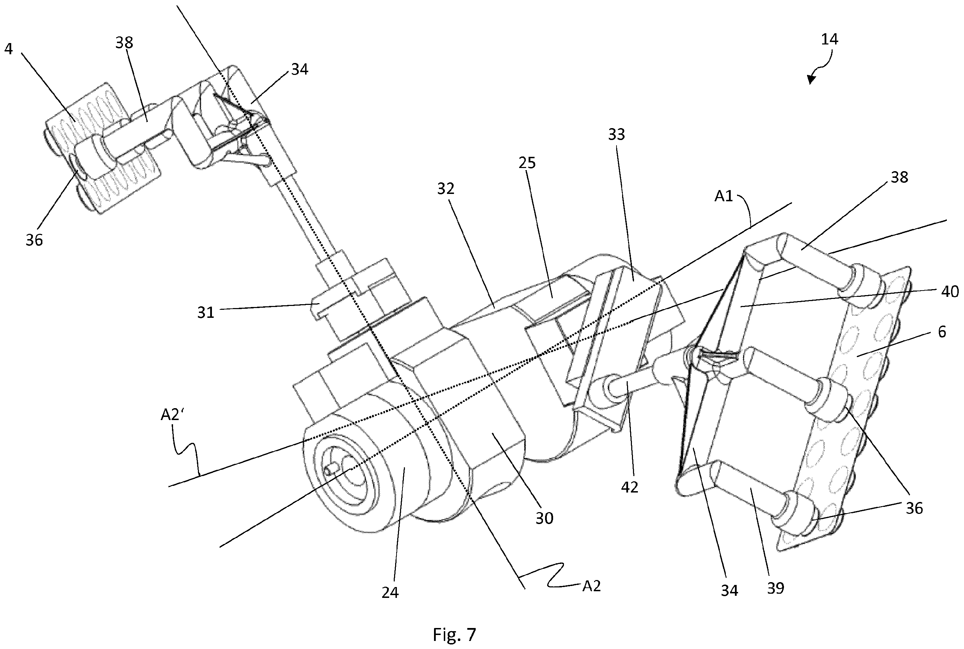

Bezug nehmend auf Fig. 7 bis 10 werden nun Details der zweiten Übergabeeinheit 14 näher beschrieben. Wie aus Fig. 7 hervorgeht, weist der erste Saugerarm 24 ein erstes Segment 30 und ein zweites Segment 31 auf. Das erste Segment 30 des ersten Saugerarms 24 ist um eine erste Achse A1, die senkrecht zur Längsmittelebene L verläuft, drehbar befestigt. Das erste Segment des ersten Saugerarms 24 weist einen Abschnitt auf, an dem das zweite Segment 31 drehbar um eine zur ersten Achse A1 im Wesentlichen senkrecht verlaufende ortsveränderliche zweite Achse A2 befestigt ist. An dem zweiten Segment 31 ist eine Saugvorrichtung 34 zum Ansaugen und Halten der Blisterpackung 4 angeordnet.

Der zweite Saugerarm 25 weist ebenfalls ein erstes Segment 32 und ein zweites Segment 33 auf. Das erste Segment 32 des zweiten Saugerarms 25 ist um dieselbe erste Achse A1 drehbar befestigt. Das erste Segment 32 des zweiten Saugerarms 25 weist außerdem einen Abschnitt auf, an dem das zweite Segment 33 drehbar um eine weitere zur ersten Achse A1 im Wesentlichen senkrecht verlaufende ortsveränderliche zweite Achse A2' befestigt ist. An dem zweiten Segment 33 ist ebenfalls eine Saugvorrichtung 34 zum Ansaugen und Halten einer Blisterpackung 6 angeordnet.

Die Saugerarme 24, 25 sind derart ausgestaltet und angesteuert, dass die Bewegung der Saugerarme 24, 25 von ihrer jeweiligen Aufnahmestellung zu ihrer jeweiligen Abgabestellung und zurück eine kombinierte Bewegung ist, die sich zumindest aus einer ersten Drehbewegung des ersten Segments 30, 32 und des zweiten Segments 31, 33 um die erste Achse A1 und einer zweiten Drehbewegung des zweiten Segments 31, 33 um die jeweils zugehörige zweite Achse A2, A2' zusammensetzt.

Wie aus Fig. 2 hervorgeht, ist die zweite Achse A2 des ersten Saugerarms 24 derart angeordnet, dass sie sich während der ersten Drehbewegung um die erste Achse A1 in einer ersten Ebene E1 bewegt, die die erste Zwischenablageposition 22 oder deren seitliche Projektion in einer ersten geraden Linie L1 schneidet. Diese erste gerade Linie L1 ist seitlich versetzt zur Mitte M1 der ersten Zwischenablageposition 22 angeordnet. Der seitliche Versatz dieser ersten geraden Linie L1 erfolgt ausgehend von der Mitte M1 der ersten Zwischenablageposition 22 in Richtung der Längsmittelebene L.

Die zweite Achse A2' des zweiten Saugerarms 25 ist derart angeordnet, dass sie sich während der ersten Drehbewegung des zweiten Saugerarms 25 um die erste Achse A1 in einer zweiten Ebene E2 bewegt, die die zweite Zwischenablageposition 23 oder deren seitliche Projektion in einer zweiten geraden Linie L2 schneidet, die seitlich versetzt zur Mitte M2 der zweiten Zwischenablageposition 23 ist. Auch hier ist der seitliche Versatz, ausgehend von der Mitte M2 der zweiten Zwischenablageposition 23, zur Längsmittelebene L hin gerichtet.

Bezug nehmend auf Fig. 7 umfasst die Saugvorrichtung 34 jedes Saugerarms 24, 25 mehrere Saugköpfe 36, die mittels eines Trägerarms 38 am zweiten Segment 31, 33 befestigt sind. Es ist auch möglich, dass lediglich ein Saugkopf 36 je Saugvorrichtung 34 vorhanden ist. Bei Vorliegen von mehreren Saugköpfen 36 können auch mehrere separate Trägerarme 38 zur Verbindung mit dem zweiten Segment 31, 33 vorliegen. In der dargestellten Ausführungsform ist der Trägerarm 38 rechenförmig ausgebildet und umfasst mehrere Finger 39, an deren Spitze jeweils ein Saugkopf 36 angeordnet ist. Der Trägerarm 38 ist vorzugsweise starr am zweiten Segment 31, 33 befestigt. In der dargestellten Ausführungsform ragen die Finger 39 des Trägerarms 38 von einer gemeinsamen Verbindungsstrebe 40 senkrecht ab. Die Verbindungsstrebe 40 ist wiederum mittels eines senkrecht zu ihr verlaufenden Verbindungsglieds 42 mit dem zweiten Segment 31, 33 verbunden. In der dargestellten Ausführungsform ist das Verbindungsglied 42 des Trägerarms 38 senkrecht mit dem zweiten Segment 31, 33 verbunden. Ebenso ist es denkbar, dass das Verbindungsglied 42 und somit der Trägerarm 38 schräg vom zweiten Segment 31, 33 abragt. In der jeweiligen Aufnahmestellung und Abgabestellung der Saugerarme 24, 25 ragt das Verbindungsglied 42 und somit der Trägerarm 38 jeweils schräg nach unten ab. Auf diese Weise könnte der Winkel, den der jeweilige Saugerarm 24, 25 um die erste Achse A1 zurücklegen muss, reduziert werden.

Wie aus Fig. 2 und 7 hervorgeht, ist das zweite Segment 31, 33 des ersten oder zweiten Saugerarms 24, 25 in der jeweiligen Aufnahmestellung bezüglich der Längsmittelebene L nach außen geschwenkt. Konkret ist der Abschnitt des zweiten Segments 31, 33 nach außen geschwenkt, an dem der Trägerarm 38 befestigt ist. Ebenso ist erkennbar, dass das zweite Segment 31, 33 des ersten oder zweiten Saugerarms 24, 25, konkret derjenige Abschnitt des zweiten Segments 31, 33, an dem der Trägerarm 38 befestigt ist, in der jeweiligen Abgabestellung bezüglich der Längsmittelebene L nach innen geschwenkt ist.

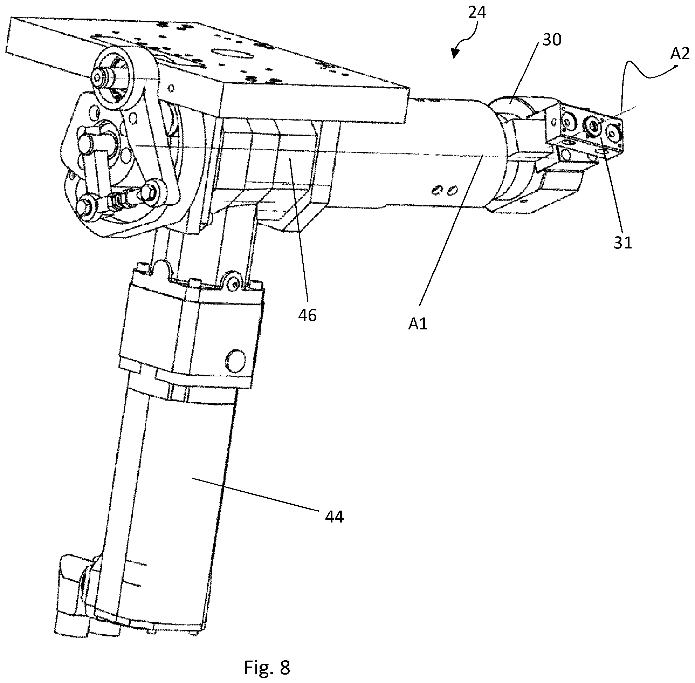

Bezug nehmend auf Fig. 8 bis 10 werden nun Details eines möglichen Antriebs für den Saugerarm 24 beschrieben.

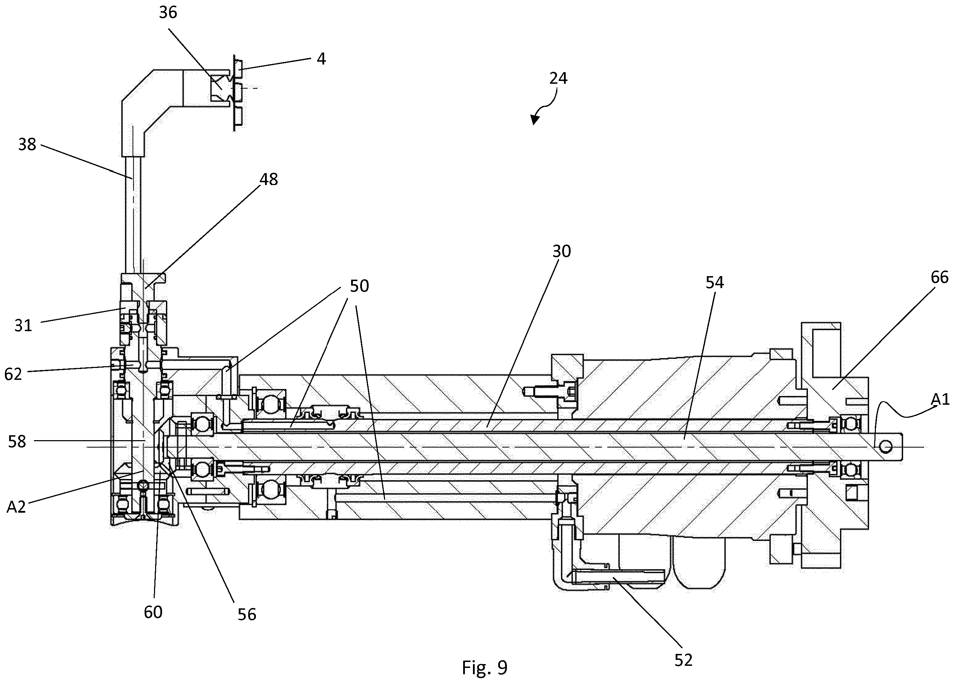

In Fig. 8 ist ein Motor 44 erkennbar, der über ein Getriebe 46 das erste Segment 30 um die erste Achse A1 hin- und zurückschwenkt. Das um die zweite Achse A2 schwenkbare zweite Segment 31 ist ohne die daran befestigte Saugvorrichtung 34 dargestellt. Die Saugvorrichtung 34 ist vorzugsweise ein Formatteil, das je nach Art und Größe der zu übergebenden Blisterpackungen 4, 6 ausgetauscht werden kann. Zur lösbaren Befestigung des Trägerarms 38 der Saugvorrichtung 34 am zweiten Segment 31 ist vorzugsweise eine Rändelschraube 48 (siehe Fig. 9) vorgesehen. Zur weiteren Anpassung an unterschiedliche Formate können die Saugerarme 24, 25 auch parallel zur ersten Achse A1 verschiebbar gelagert sein, und/oder in Längsrichtung verschiebbar sein.

In der Querschnittsansicht nach Fig. 9 sind der Motor 44 und das Getriebe 46 nicht dargestellt. Vom Motor 44 wird das erste Segment 30 des Saugerarms 24, das als Hohlwelle ausgebildet ist, angetrieben. Bei Betätigung des Motors 44 wird das erste Segment 30 um die erste Achse A1 hin- und hergeschwenkt. Das zweite Segment 31 ist in einem Abschnitt des ersten Segments 30 um die zweite Achse A2 drehbar gelagert. Im ersten Segment 30 sind Luftkanäle 50 enthalten, die mit einem Vakuumanschluss 52 für die Saugköpfe 36 verbunden sind. Im Inneren des ersten Segments 30 ist zudem eine Welle 54 angeordnet, an deren einem Ende, das dem zweiten Segment 31 zugewandt ist, ein Kegelrad 56 starr befestigt ist.

Das zweite Segment 31 umfasst eine zentrale Welle 58, die drehbar in dem Endabschnitt des ersten Segments 30 gelagert ist und sich bei einer Drehbewegung des ersten Segments 30 um die erste Achse A1 mit dem ersten Segment 30 mitdreht. Fest mit der Welle 58 ist ein weiteres Kegelrad 60 verbunden, das bei einer Drehbewegung des ersten und zweiten Segments 30, 31 um die erste Achse A1 mit dem Kegelrad 56 kämmt. Eine Ringnut 62 in der Welle 58 dient zur Herstellung einer Verbindung mit den Luftkanälen 50 im ersten Segment 30 auch während einer Drehbewegung des zweiten Segments 31 um die zweite Achse A2.

Wenn nun das erste Segment 30 und somit auch das zweite Segment 31 um die erste Achse A1 verschwenkt werden, läuft das Kegelrad 60 am unbewegten Kegelrad 56 ab und versetzt somit die Welle 58 in eine Drehbewegung um die zweite Achse A2. Bei einer Übersetzung von 1:1 zwischen den Kegelrädern 56, 60 bringt somit eine Schwenkung des ersten Segments 30 und des zweiten Segments 31 um die erste Achse A1 um 180°, wie sie bei den in Fig. 1 bis 6 dargestellten Übergabeprozessen gewünscht ist, ebenfalls eine Drehung des zweiten Segments 31 um die zweite Achse A2 um 180° mit sich. Somit führt das zweite Segment 31 und die an der Saugvorrichtung 34 gehaltene Blisterpackung 4 eine Drehbewegung um die zweite Achse A2 von im Wesentlichen 180° aus, wenn sich der Saugerarm 24 von seiner Aufnahmestellung zu seiner Abgabestellung oder umgekehrt bewegt. Wenn die Saugvorrichtung 34 in der Aufnahmestellung und der Abgabestellung schräg nach unten abragt, kann das erste Segment 30 bei der Schwenkbewegung um die erste Achse A1 auch nur einen Winkelbereich von weniger als 180°, bis hin zu 120°, überstreichen. In diesem Fall müsste die Übersetzung zwischen den Kegelrädern 56, 60 entsprechend angepasst werden, weil das zweite Segment 31 in jedem Fall eine Drehbewegung um die zweite Achse A2 um 180° vollziehen muss.

Die Drehbewegung des zweiten Segments 31 um die zweite Achse A2 in Kombination mit der Schwenkbewegung um die erste Achse A1 bewirkt, dass die jeweilige Blisterpackung 4 von dem Saugkopf 36 an einer Seite, vorzugsweise an der ebenen Fläche der Deckfolienseite, ergriffen und anschließend von oben in die Endablageposition 26 abgelegt werden kann. Dabei vollzieht die Blisterpackung 4 eine 180°-Drehung um ihren Mittelpunkt.

Abweichend vom bisher dargestellten Grundprinzip ist es gewünscht, dass das zweite Segment 31 in den Endbereichen der Schwenkbewegung um die erste Achse A1 keine Drehbewegung um die zweite Achse A2 vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der zweiten Übergabeeinheit 14 ein Mechanismus 64 zur Anpassung des Drehverlaufs des zweiten Segments 31 um die zweite Achse A2 vorgesehen sein.

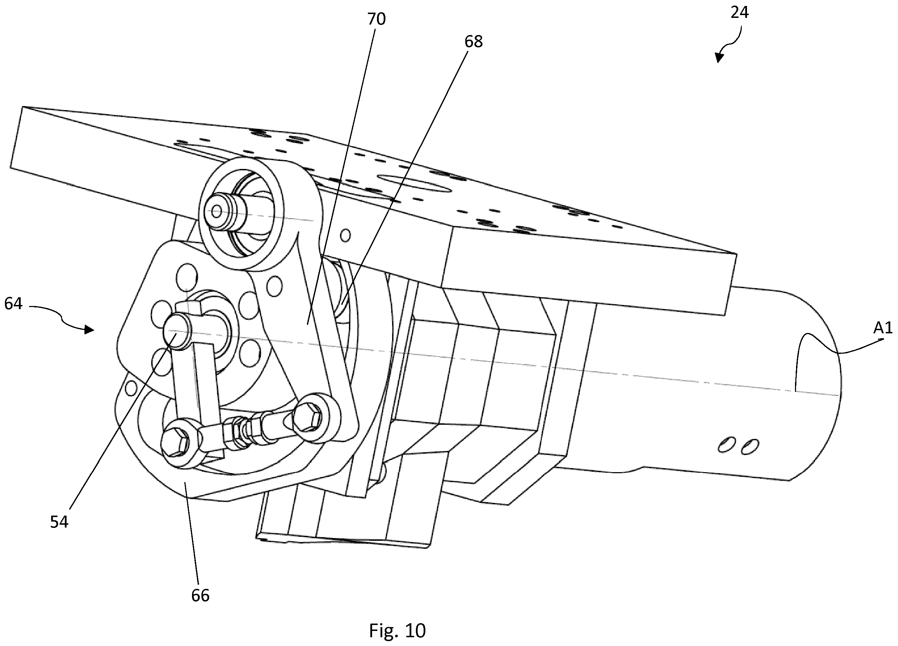

Dieser Mechanismus 64 wird nun unter Bezugnahme auf Fig. 10 näher beschrieben. In Fig. 10 ist das Ende des ersten Segments 30, an dem das zweite Segment 31 sowie die Saugvorrichtung 34 befestigt sind, aus Zwecken der Übersichtlichkeit nicht dargestellt. Der Mechanismus 64 umfasst eine Kurvenscheibe 66, die gemeinsam mit dem ersten Segment 30 um die erste Achse A1 gedreht wird. In der Querschnittsansicht in Fig. 9 ist diese Kurvenscheibe 66 ebenfalls gezeigt, allerdings ohne die weiteren Komponenten des Mechanismus 64.

Wieder Bezug nehmend auf Fig. 10 umfasst der Mechanismus 64 des Weiteren eine Kurvenrolle 68, die drehbar an einem Hebelmechanismus 70 angelenkt ist. Der Hebelmechanismus 70 wiederum ist mit der inneren Welle 54 starr verbunden, an deren anderem Ende das Kegelrad 56 angeordnet ist. Bei Drehung der Kurvenscheibe 66 um die erste Achse A1 läuft die Kurvenrolle 68 an der Kurvenscheibe 66 ab und bewirkt somit eine entsprechende Auslenkung des Hebelmechanismus 70, was wiederum zu einer Drehung der Welle 54 um die erste Achse A1 führt. Der Mechanismus 64 ist so gestaltet, dass sich die Welle 54 und somit das Kegelrad 56 in den Anfangs- und Endbereichen der Drehbewegung des ersten Segments 30 und somit der Kurvenscheibe 66 um die erste Achse A1 mit derselben Winkelgeschwindigkeit wie das erste Segment 30 mitbewegen. Auf diese Weise erfolgt zwischen Kegelrad 56 und Kegelrad 60 keine Relativbewegung, sodass auch keine Drehbewegung des zweiten Segments 31 um die zweite Achse A2 initiiert wird.

Im weiteren Verlauf der Schwenkbewegung um die erste Achse A1 hingegen wird durch den Mechanismus 64 eine gegenläufige Bewegung der Welle 54 entgegen der Drehrichtung des ersten Segments 30 bewirkt, wodurch die Drehgeschwindigkeit des zweiten Segments 31 um die zweite Achse A2 bereichsweise schneller ist als die Drehbewegung um die erste Achse A1. Auf diese Weise gelingt es, an den Endpunkten der Schwenkbewegung um die erste Achse A1 die Drehbewegung des zweiten Segments 31 um die zweite Achse A2 auszusetzen und dies in einem Mittelbereich der Schwenkbewegung um die erste Achse A1 durch schnellere Drehung des zweiten Segments 31 um die zweite Achse A2 wieder auszugleichen. Dadurch wird gewährleistet, dass die Blisterpackungen 4 immer eine Drehbewegung um die zweite Achse A2 um 180° vollziehen.

Selbstverständlich existieren vielfältige Modifikationen der bislang beschriebenen Struktur des Saugerarms 24 und des zugehörigen Antriebs. So kann beispielsweise die Kopplung zwischen der Schwenkbewegung des ersten Segments 30 um die erste Achse A1 und der Drehbewegung des zweiten Segments 31 um die zweite Achse A2 auch mittels anderer mechanischer Komponenten gelöst werden. Außerdem ist es denkbar, zwei separate Servomotoren für den Antrieb des ersten Segments 30 und des zweiten Segments 31 vorzusehen.

Der Aufbau des Saugerarms 25 ist spiegelsymmetrisch zum Saugerarm 24, wobei das erste Segment mit 32, das zweite Segment mit 33 und die zweite Achse mit A2' bezeichnet sind.

Bezugnehmend auf Fig. 1 bis 6 soll nun der Ablauf eines Übergabeprozesses mit der beschriebenen Vorrichtung 2 näher erläutert werden. Die Blisterpackungen 4, 6 werden an den beiden Bereitstellpositionen 20, 21 in der Stanzstation 10 gleichzeitig durch den ersten und zweiten Saugerarm 18, 19 der ersten Übergabeeinheit 8 aufgenommen, zur ersten und zweiten Zwischenablageposition 22, 23 bewegt und dort abgelegt. Die Blisterpackungen 4, 6 werden in den Bereitstellpositionen 20, 21 vorzugsweise von der ersten Übergabeeinheit 8 von oben aufgenommen und ebenfalls von oben in den Zwischenablagepositionen 22, 23 auf die Zwischenablage 12 abgelegt.

Aufgrund der kombinierten Drehbewegungen um die zwei zueinander senkrechten Achsen werden die Blisterpackungen 4, 6, die in den Bereitstellpositionen 20, 21 in einer Reihe zu beiden Seiten der Längsmittelebene L angeordnet sind, in den Zwischenablagepositionen 22, 23 im Vergleich zu den Bereitstellpositionen 20, 21 mit derselben Seite nach oben, aber um 180° um ihre Mittelpunkte gedreht abgelegt. Gegebenenfalls ist es auch möglich, dass die Blisterpackungen 4, 6 nicht in einer horizontalen Ausrichtung an den Bereitstellpositionen 20, 21 liegen, sondern beispielsweise in einer senkrechten Ausrichtung oder unter einem schrägen Winkel zur Vertikalen bereitgestellt werden. In diesem Fall vollziehen die Saugerarme 18, 19 eine Schwenkbewegung um die erste Achse lediglich über einen Winkel, der kleiner als 180° ist, in der Regel zwischen 60° und 180°.

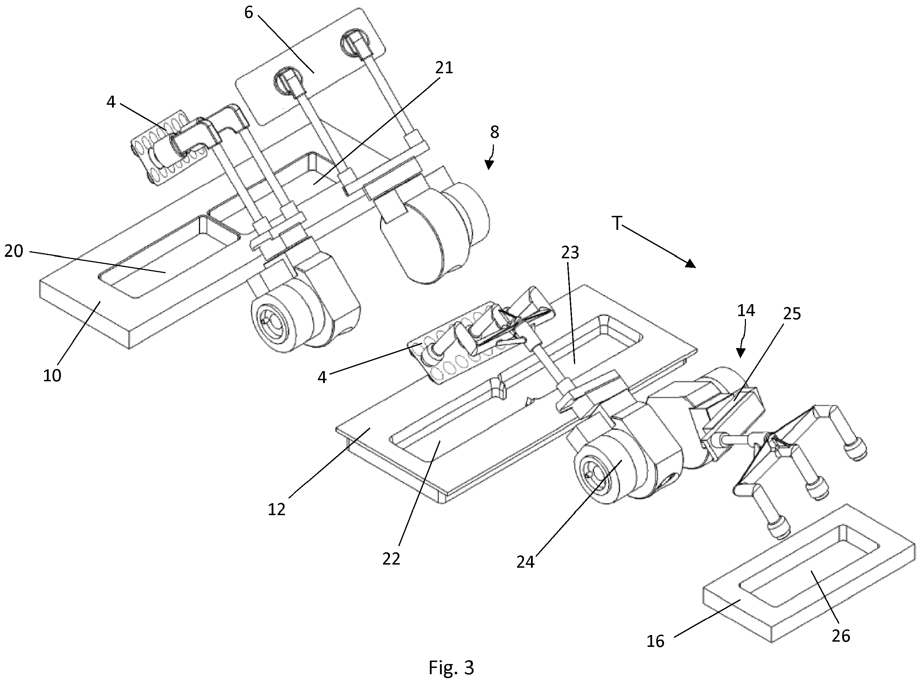

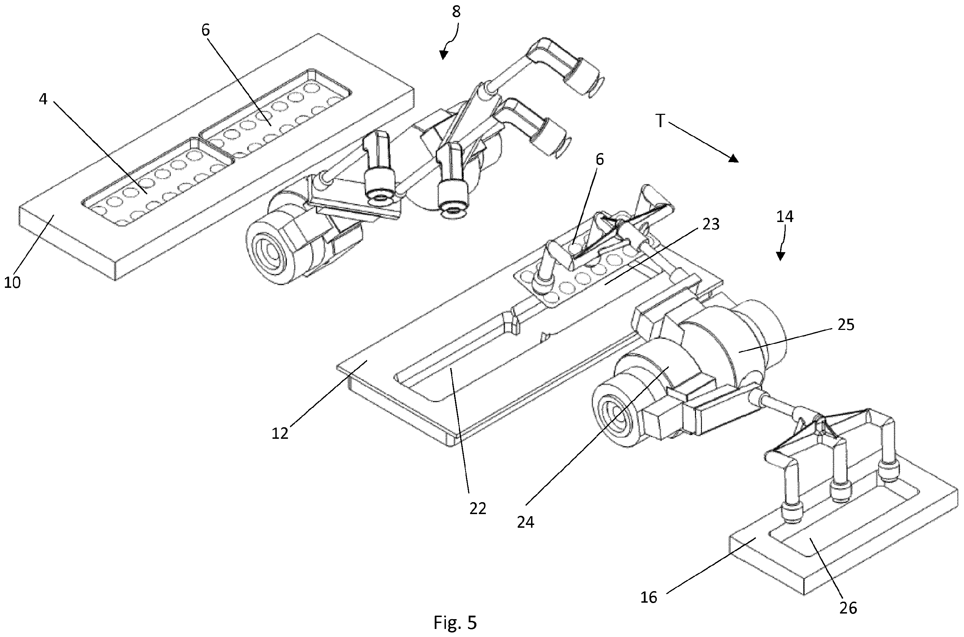

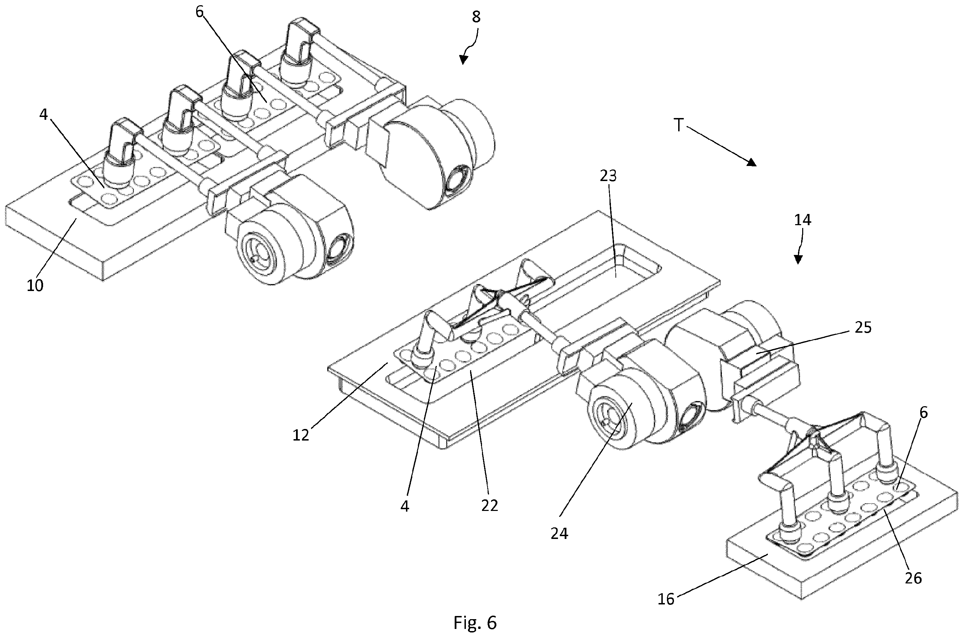

Fig. 1 zeigt die Blisterpackungen 4, 6 unmittelbar nach Verlassen der Bereitstellpositionen 20, 21. In Fig. 3 befinden sich die Blisterpackungen 4, 6 auf dem Weg von den Bereitstellpositionen 20, 21 zu den Zwischenablagepositionen 22, 23, wo sie in Fig. 4 abgelegt werden. In Fig. 5 befinden sich die Saugerarme 18, 19 auf dem Weg zurück zu ihren Aufnahmestellungen, und in Fig. 6 beginnt der Übergabezyklus wieder von vorne.

Wie zuvor bereits erläutert wurde, könnte anstelle der beiden gleichsinnig bewegten Saugerarme 18, 19 auch ein einziger Saugerarm für die Übergabe beider Blisterpackungen 4, 6 von der Stanzstation 10 zur Zwischenablage 12 verwendet werden. Ebenso ist es denkbar, dass keine gleichzeitige Übergabe der Blisterpackungen 4, 6 mittels der ersten Übergabeeinheit 8 stattfindet, sondern eine gegenläufige Bewegung der Saugerarme 18, 19.

Sobald die Blisterpackungen 4, 6 in den Zwischenablagepositionen 22, 23 bereitliegen, kann die erste Blisterpackung 4 dort von dem ersten Saugerarm 24 der zweiten Übergabeeinheit 14 ergriffen und zur Endablageposition 26 transferiert werden. Die erste Blisterpackung 4 wird in der ersten Zwischenablageposition 22 von oben aufgenommen und ebenfalls von oben in der Endablageposition 26 auf das Fördermittel 16 abgelegt. Die erste Blisterpackung 4 ist dabei in der ersten Zwischenablageposition 22 bezüglich der Längsmittelebene L nach außen versetzt angeordnet und in der Endablageposition 26 im Bereich der Längsmittelebene L angeordnet. Die erste Blisterpackung 4 wird in der Endablageposition 26 im Vergleich zur ersten Zwischenablageposition 22 mit derselben Seite nach oben, aber um 180° um ihren Mittelpunkt gedreht abgelegt. Fig. 1 zeigt die erste Blisterpackung kurz nach deren Ergreifen an der ersten Zwischenablageposition 22. In Fig. 3 befindet sich die erste Blisterpackung 4 auf dem Weg von der ersten Zwischenablageposition 22 zur Endablageposition 26, wo sie kurz nach dem in Fig. 4 dargestellten Zeitpunkt abgelegt wird. In Fig. 5 ist der erste Saugerarm 24 kurz nach dem Ablegevorgang dargestellt, während er sich bereits wieder auf dem Rückweg in seine Aufnahmestellung befindet. In Fig. 6 beginnt der Zyklus wieder von vorne. Der Vorgang wird so oft wiederholt wie gewünscht.

Für die Übergabe der zweiten Blisterpackung 6 aus der zweiten Zwischenablageposition 23 hin zur gemeinsamen Endablageposition 26 mittels des zweiten Saugerarms 25 gelten exakt dieselben Aussagen wie für die Übergabe der ersten Blisterpackung 4 mittels des ersten Saugerarms 24. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Saugerarme 24, 25 vollziehen eine Schwenkbewegung um dieselbe erste Achse A1, während die Drehbewegungen ihrer zweiten Segmente 31, 33 um die jeweilige zweite Achse A2, A2' zueinander entgegengesetzte Drehrichtungen zeigen. An einem Scheitelpunkt der Drehbewegung, wie sie im Querschnitt in Fig. 9 dargestellt ist, sind die Blisterpackungen vorzugsweise parallel zur Längsmittelebene L angeordnet.

Die Zeitpunkte des Aufnehmens der Blisterpackungen 4, 6 von den Zwischenablagepositionen 22, 23 müssen mit den Zeitpunkten des Ablegens der Blisterpackungen 4, 6 auf den Zwischenablagepositionen 22, 23 durch die erste Übergabeeinheit 8 koordiniert sein. Um den Durchsatz zu erhöhen, kann es sinnvoll sein, dass der entsprechende Saugerarm 24, 25 der zweiten Übergabeeinheit 14 die entsprechende Blisterpackung 4, 6 bereits an der Zwischenablageposition 22, 23 aufnimmt, während der entsprechende Saugerarm 18, 19 der ersten Übergabeeinheit 24 sich noch im Bereich der Zwischenablageposition 22, 23 befindet. Für einen solchen Fall ist es notwendig, dass die Saugerarme 18, 19, 24, 25 eine Geometrie aufweisen, die es ermöglicht, dass die Saugvorrichtungen 34 der Saugerarme 18, 19, 24, 25 im Bereich der Zwischenablagepositionen 22, 23 versetzt zueinander sind, siehe Fig. 4.

Der Aufbau und Antrieb der Saugerarme 18, 19 der ersten Übergabeeinheit 8 ist vorzugsweise im Wesentlichen identisch zur Struktur und zum Antrieb der Saugerarme 24, 25 der zweiten Übergabeeinheit 14, wie sie oben detailliert beschrieben wurden. Lediglich die Ebenen, in denen sich die zweiten Achsen der Saugerarme 18, 19 bewegen, schneiden die Bereitstellpositionen 20, 21 sowie die Zwischenablagepositionen 22, 23 in geraden Linien, die mittig bezüglich der Bereitstellpositionen 20, 21 und der Zwischenablagepositionen 22, 23 sind. Auf diese Weise entfällt der seitliche Versatz der Blisterpackungen 4, 6 während der Übergabe.

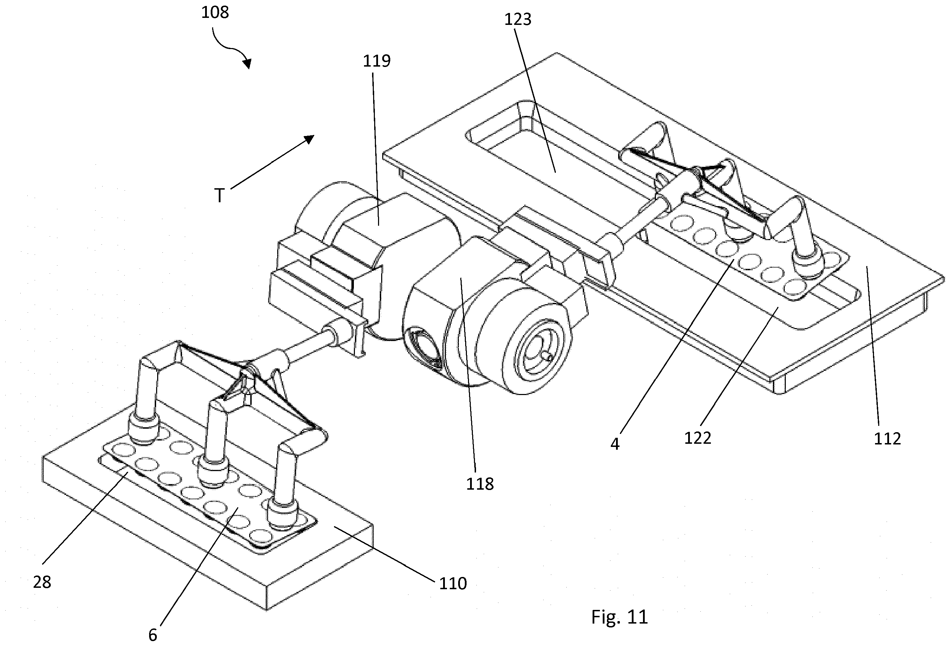

Fig. 11 bis 17 zeigen eine alternative erfindungsgemäße Ausgestaltung der ersten Übergabeeinheit, hier mit 108 bezeichnet. Im Vergleich zur zuvor beschriebenen Ausgestaltung der ersten Übergabeeinheit werden die Blisterpackungen 4, 6 in dieser Ausgestaltung in einer gemeinsamen Bereitstellposition 28 in der Stanzstation 10 bereitgestellt und in den Zwischenablagepositionen 122, 123 mit einem seitlichen Versatz abgelegt.

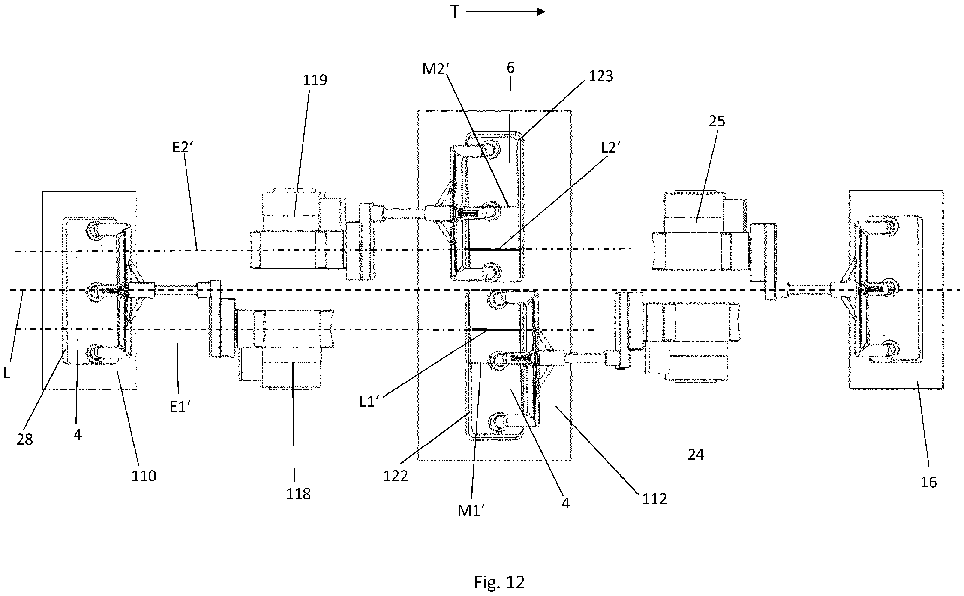

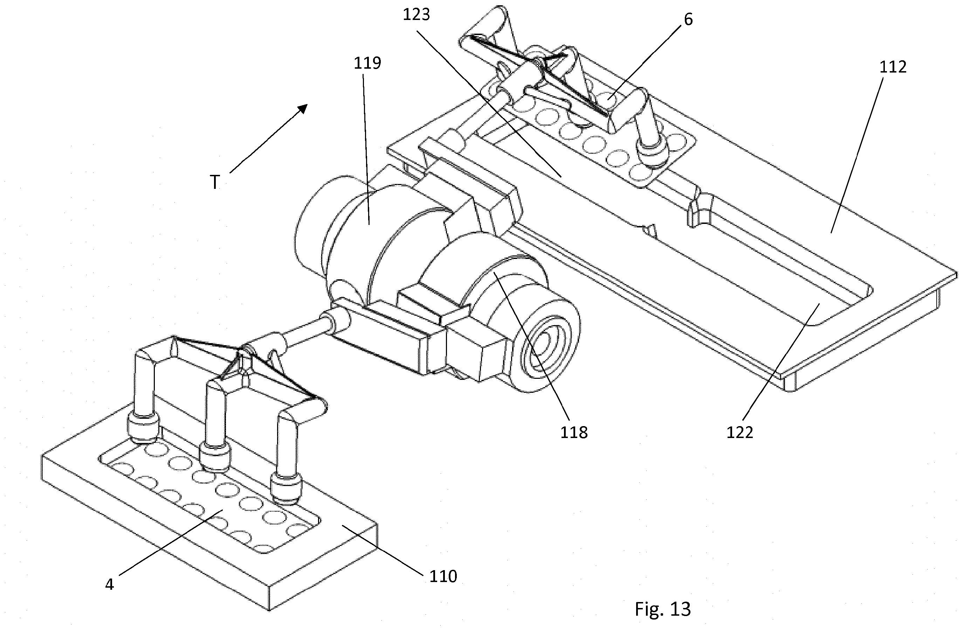

Die erfindungsgemäße Ausgestaltung der ersten Übergabeeinheit 108 weist einen ersten Saugerarm 118 und einen zweiten Saugerarm 119 auf, die zu beiden Seiten der Längsmittelebene L der Vorrichtung 2 bzw. der Übergabeeinheit 108 in einer Reihe nebeneinander angeordnet sind. Der erste Saugerarm 118 ist bewegbar zwischen einer Aufnahmestellung (siehe Fig. 12 und 13) zum Aufnehmen der ersten Blisterpackung 4 von der gemeinsamen Bereitstellposition 28 und einer Abgabestellung (die zeitlich kurz nach der in Fig. 11 dargestellten Position erreicht wird) zum Ablegen der ersten Blisterpackung 4 in einer ersten Zwischenablageposition 122 auf der Zwischenablage 112.

Der zweite Saugerarm 119 ist bewegbar zwischen einer Aufnahmestellung (siehe Fig. 11) zum Aufnehmen der zweiten Blisterpackung 6 von der Bereitstellposition 28 und einer Abgabestellung (die zeitlich kurz nach der in Fig. 13 dargestellten Position erreicht wird) zum Ablegen der zweiten Blisterpackung 6 in einer zweiten Zwischenablageposition 123.

Die beiden Saugerarme 118, 119 sind vorzugsweise spiegelsymmetrisch bezüglich der Längsmittelebene L der Vorrichtung 2 bzw. der Übergabeeinheit 108 angeordnet und aufgebaut. Die beiden Saugerarme 118, 119 führen gegenläufige hin- und hergehende Schwenkbewegungen aus. Wenn der erste Saugerarm 118 sich in der Aufnahmestellung befindet, befindet sich der zweite Saugerarm 119 in seiner Abgabestellung oder zumindest in der Nähe der Abgabestellung. Wenn sich der erste Saugerarm 118 in der Abgabestellung befindet, befindet sich der zweite Saugerarm 119 in seiner Aufnahmestellung oder zumindest in der Nähe der Aufnahmestellung. Die Abgabestellung des ersten Saugerarms 118 unterscheidet sich räumlich von der Abgabestellung des zweiten Saugerarms 119. Ebenso unterscheidet sich die Aufnahmestellung des ersten Saugerarms 118 von der Aufnahmestellung des zweiten Saugerarms 119 aufgrund der Spiegelsymmetrie der Saugerarme 118, 119 bezüglich der Längsmittelebene L.

Die erste und zweite Zwischenablageposition 122, 123 auf der Zwischenablage 112 entsprechen von ihrer Form und Anordnung den Zwischenablagepositionen 22, 23 der zuvor beschriebenen Ausführungsform. Wie aus Fig. 12 ersichtlich ist, sind die erste und zweite Zwischenablageposition 122, 123 bezüglich der Längsmittelebene L nach außen versetzt angeordnet. Die gemeinsame Bereitstellposition 28 ist hingegen im Bereich der Längsmittelebene L angeordnet. In der hier dargestellten bevorzugten Ausführungsform ist die gemeinsame Bereitstellposition 28 derart symmetrisch zur Längsmittelebene L angeordnet, dass die Längsmittelebene L die Bereitstellposition 28 mittig schneidet.

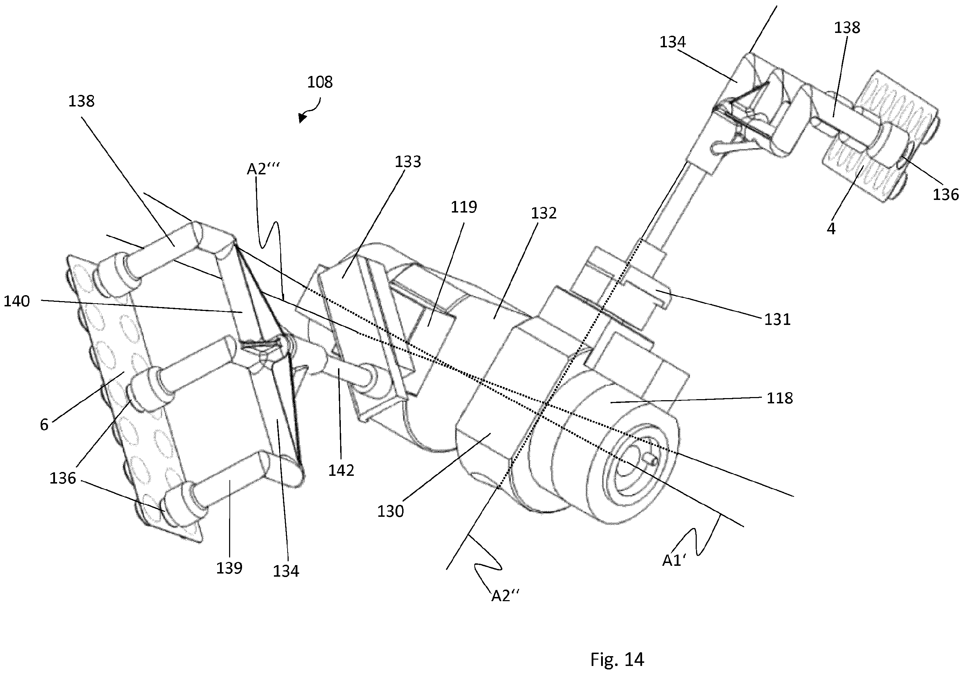

Bezug nehmend auf Fig. 14 bis 17 werden nun Details der erfindungsgemäßen Übergabeeinheit 108 näher beschrieben. Wie aus Fig. 14 hervorgeht, weist der erste Saugerarm 118 ein erstes Segment 130 und ein zweites Segment 131 auf. Das erste Segment 130 des ersten Saugerarms 118 ist um eine erste Achse A1', die senkrecht zur Längsmittelebene L verläuft, drehbar befestigt. Das erste Segment 130 des ersten Saugerarms 118 weist einen Abschnitt auf, an dem das zweite Segment 131 drehbar um eine zur ersten Achse A1' im Wesentlichen senkrecht verlaufende ortsveränderliche zweite Achse A2" befestigt ist. An dem zweiten Segment 131 ist eine Saugvorrichtung 134 zum Ansaugen und Halten der Blisterpackung 4 angeordnet.

Der zweite Saugerarm 119 weist ebenfalls ein erstes Segment 132 und ein zweites Segment 133 auf. Das erste Segment 132 des zweiten Saugerarms 119 ist um dieselbe erste Achse A1' drehbar befestigt. Das erste Segment 132 des zweiten Saugerarms 119 weist außerdem einen Abschnitt auf, an dem das zweite Segment 133 drehbar um eine weitere zur ersten Achse A1' im Wesentlichen senkrecht verlaufende ortsveränderliche zweite Achse A2'" befestigt ist. An dem zweiten Segment 133 ist ebenfalls eine Saugvorrichtung 134 zum Ansaugen und Halten einer Blisterpackung 6 angeordnet.

Die Saugerarme 118, 119 sind derart ausgestaltet und angesteuert, dass die Bewegung der Saugerarme 118, 119 von ihrer jeweiligen Aufnahmestellung zu ihrer jeweiligen Abgabestellung und zurück eine kombinierte Bewegung ist, die sich zumindest aus einer ersten Drehbewegung des ersten Segments 130, 132 und des zweiten Segments 131, 133 um die erste Achse A1' und einer zweiten Drehbewegung des zweiten Segments 131, 133 um die jeweils zugehörige zweite Achse A2", A2'" zusammensetzt.

Wie aus Fig. 12 hervorgeht, ist die zweite Achse A2" des ersten Saugerarms 118 derart angeordnet, dass sie sich während der ersten Drehbewegung um die erste Achse A1' in einer ersten Ebene E1' bewegt, die die erste Zwischenablageposition 122 oder deren seitliche Projektion in einer ersten geraden Linie L1' schneidet. Diese erste gerade Linie L1' ist seitlich versetzt zur Mitte M1' der ersten Zwischenablageposition 122 angeordnet. Der seitliche Versatz dieser ersten geraden Linie L1' erfolgt ausgehend von der Mitte M1' der ersten Zwischenablageposition 122 in Richtung der Längsmittelebene L.

Die zweite Achse A2'" des zweiten Saugerarms 119 ist derart angeordnet, dass sie sich während der ersten Drehbewegung des zweiten Saugerarms 119 um die erste Achse A1' in einer zweiten Ebene E2' bewegt, die die zweite Zwischenablageposition 123 oder deren seitliche Projektion in einer zweiten geraden Linie L2' schneidet, die seitlich versetzt zur Mitte M2' der zweiten Zwischenablageposition 123 ist. Auch hier ist der seitliche Versatz, ausgehend von der Mitte M2' der zweiten Zwischenablageposition 123, zur Längsmittelebene L hin gerichtet.

Bezug nehmend auf Fig. 14 umfasst die Saugvorrichtung 134 jedes Saugerarms 118, 119 mehrere Saugköpfe 136, die mittels eines Trägerarms 138 am zweiten Segment 131, 133 befestigt sind. Es ist auch möglich, dass lediglich ein Saugkopf 136 je Saugvorrichtung 134 vorhanden ist. Bei Vorliegen von mehreren Saugköpfen 136 können auch mehrere separate Trägerarme 138 zur Verbindung mit dem zweiten Segment 131, 133 vorliegen. In der dargestellten Ausführungsform ist der Trägerarm 138 rechenförmig ausgebildet und umfasst mehrere Finger 139, an deren Spitze jeweils ein Saugkopf 136 angeordnet ist. Der Trägerarm 138 ist vorzugsweise starr am zweiten Segment 131, 133 befestigt. In der dargestellten Ausführungsform ragen die Finger 139 des Trägerarms 138 von einer gemeinsamen Verbindungsstrebe 140 senkrecht ab. Die Verbindungsstrebe 140 ist wiederum mittels eines senkrecht zu ihr verlaufenden Verbindungsglieds 142 mit dem zweiten Segment 131, 133 verbunden. In der dargestellten Ausführungsform ist das Verbindungsglied 142 des Trägerarms 138 senkrecht mit dem zweiten Segment 131, 133 verbunden. Ebenso ist es denkbar, dass das Verbindungsglied 142 und somit der Trägerarm 138 schräg vom zweiten Segment 131, 133 abragt. In der jeweiligen Aufnahmestellung und Abgabestellung der Saugerarme 118, 119 ragt das Verbindungsglied 142 und somit der Trägerarm 138 jeweils schräg nach unten ab. Auf diese Weise könnte der Winkel, den der jeweilige Saugerarm 118, 119 um die erste Achse A1' zurücklegen muss, reduziert werden.

Wie aus Fig. 12 und 14 hervorgeht, ist das zweite Segment 131, 133 des ersten oder zweiten Saugerarms 118, 119 in der jeweiligen Aufnahmestellung bezüglich der Längsmittelebene L nach innen geschwenkt. Konkret ist der Abschnitt des zweiten Segments 131, 133 nach innen geschwenkt, an dem der Trägerarm 138 befestigt ist. Ebenso ist erkennbar, dass das zweite Segment 131, 133 des ersten oder zweiten Saugerarms 118, 119, konkret derjenige Abschnitt des zweiten Segments 131, 133, an dem der Trägerarm 38 befestigt ist, in der jeweiligen Abgabestellung bezüglich der Längsmittelebene L nach außen geschwenkt ist.

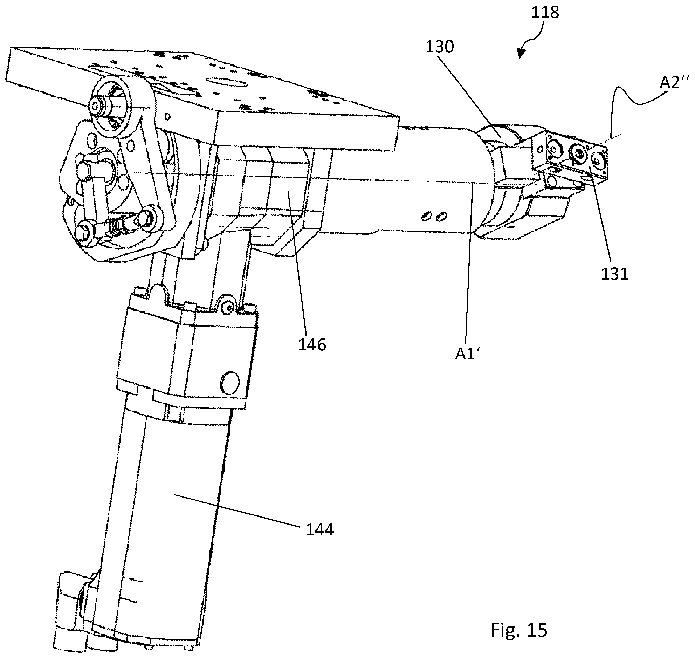

Bezug nehmend auf Fig. 15 bis 17 werden nun Details eines möglichen Antriebs für den Saugerarm 118 beschrieben.

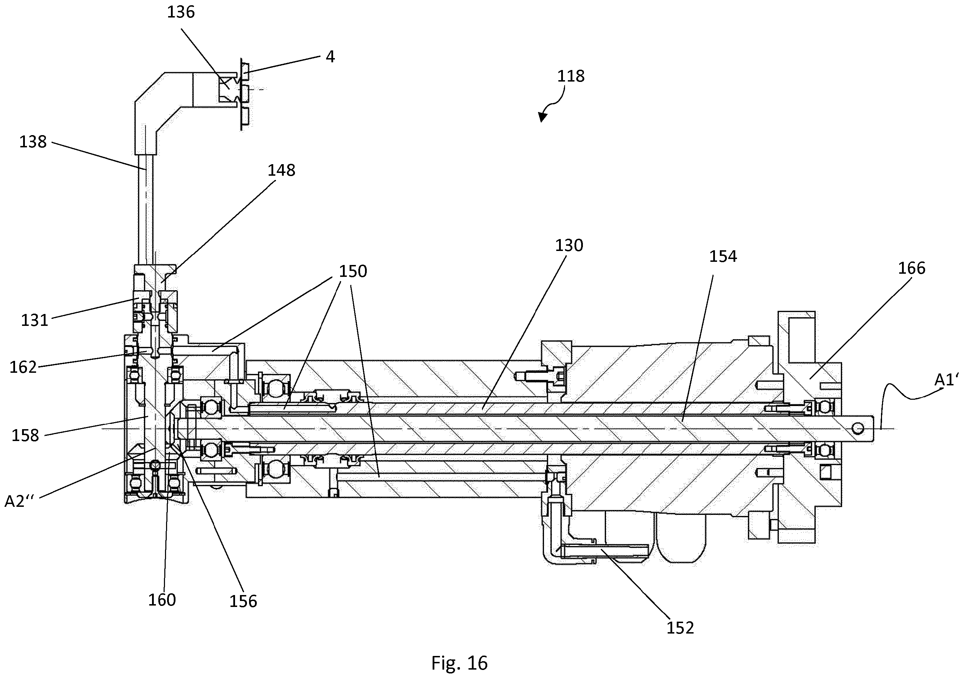

In Fig. 15 ist ein Motor 144 erkennbar, der über ein Getriebe 146 das erste Segment 130 um die erste Achse A1' hin- und zurückschwenkt. Das um die zweite Achse A2" schwenkbare zweite Segment 131 ist ohne die daran befestigte Saugvorrichtung 134 dargestellt. Die Saugvorrichtung 134 ist vorzugsweise ein Formatteil, das je nach Art und Größe der zu übergebenden Blisterpackungen 4, 6 und des gewünschten seitlichen Versatzes der Verpackungen 4, 6 während der Übergabe ausgetauscht werden kann. Zur lösbaren Befestigung des Trägerarms 138 der Saugvorrichtung 134 am zweiten Segment 131 ist vorzugsweise eine Rändelschraube 148 (siehe Fig. 16) vorgesehen. Zur weiteren Anpassung an unterschiedliche Formate können die Saugerarme 118, 119 auch parallel zur ersten Achse A1' verschiebbar gelagert sein, und/oder in Längsrichtung verschiebbar sein.

In der Querschnittsansicht nach Fig. 16 sind der Motor 144 und das Getriebe 146 nicht dargestellt. Vom Motor 144 wird das erste Segment 130 des Saugerarms 118, das als Hohlwelle ausgebildet ist, angetrieben. Bei Betätigung des Motors 144 wird das erste Segment 130 um die erste Achse A1' hin- und hergeschwenkt. Das zweite Segment 131 ist in einem Abschnitt des ersten Segments 130 um die zweite Achse A2" drehbar gelagert. Im ersten Segment 130 sind Luftkanäle 150 enthalten, die mit einem Vakuumanschluss 152 für die Saugköpfe 136 verbunden sind. Im Inneren des ersten Segments 130 ist zudem eine Welle 154 angeordnet, an deren einem Ende, das dem zweiten Segment 131 zugewandt ist, ein Kegelrad 156 starr befestigt ist.

Das zweite Segment 131 umfasst eine zentrale Welle 158, die drehbar in dem Endabschnitt des ersten Segments 130 gelagert ist und sich bei einer Drehbewegung des ersten Segments 130 um die erste Achse A1' mit dem ersten Segment 130 mitdreht. Fest mit der Welle 158 ist ein weiteres Kegelrad 160 verbunden, das bei einer Drehbewegung des ersten und zweiten Segments 130, 131 um die erste Achse A1' mit dem Kegelrad 156 kämmt. Eine Ringnut 162 in der Welle 158 dient zur Herstellung einer Verbindung mit den Luftkanälen 150 im ersten Segment 130 auch während einer Drehbewegung des zweiten Segments 131 um die zweite Achse A2".

Wenn nun das erste Segment 130 und somit auch das zweite Segment 131 um die erste Achse A1' verschwenkt werden, läuft das Kegelrad 160 am unbewegten Kegelrad 156 ab und versetzt somit die Welle 158 in eine Drehbewegung um die zweite Achse A2". Bei einer Übersetzung von 1:1 zwischen den Kegelrädern 156, 160 bringt somit eine Schwenkung des ersten Segments 130 und des zweiten Segments 131 um die erste Achse A1' um 180°, wie sie bei den in Fig. 11 bis 13 dargestellten Übergabeprozessen gewünscht ist, ebenfalls eine Drehung des zweiten Segments 131 um die zweite Achse A2" um 180° mit sich. Somit führt das zweite Segment 131 und die an der Saugvorrichtung 134 gehaltene Blisterpackung 4 eine Drehbewegung um die zweite Achse A2" von im Wesentlichen 180° aus, wenn sich der Saugerarm 118 von seiner Aufnahmestellung zu seiner Abgabestellung oder umgekehrt bewegt. Wenn die Saugvorrichtung 134 in der Aufnahmestellung und der Abgabestellung schräg nach unten abragt, kann das erste Segment 130 bei der Schwenkbewegung um die erste Achse A1' auch nur einen Winkelbereich von weniger als 180°, bis hin zu 120°, überstreichen. In diesem Fall müsste die Übersetzung zwischen den Kegelrädern 156, 160 entsprechend angepasst werden, weil das zweite Segment 131 in jedem Fall eine Drehbewegung um die zweite Achse A2 um 180° vollziehen muss.

Die Drehbewegung des zweiten Segments 131 um die zweite Achse A2" in Kombination mit der Schwenkbewegung um die erste Achse A1' bewirkt, dass die jeweilige Blisterpackung 4 von dem Saugkopf 136 an einer Seite, vorzugsweise an der ebenen Fläche der Deckfolienseite, ergriffen und anschließend von oben in die Zwischenablageposition 122 abgelegt werden kann. Dabei vollzieht die Blisterpackung 4 eine 180°-Drehung um ihren Mittelpunkt.

Abweichend vom bisher dargestellten Grundprinzip ist es gewünscht, dass das zweite Segment 11 in den Endbereichen der Schwenkbewegung um die erste Achse A1' keine Drehbewegung um die zweite Achse A2" vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der Übergabeeinheit 108 ein Mechanismus 164 zur Anpassung des Drehverlaufs des zweiten Segments 131 um die zweite Achse A2" vorgesehen sein.

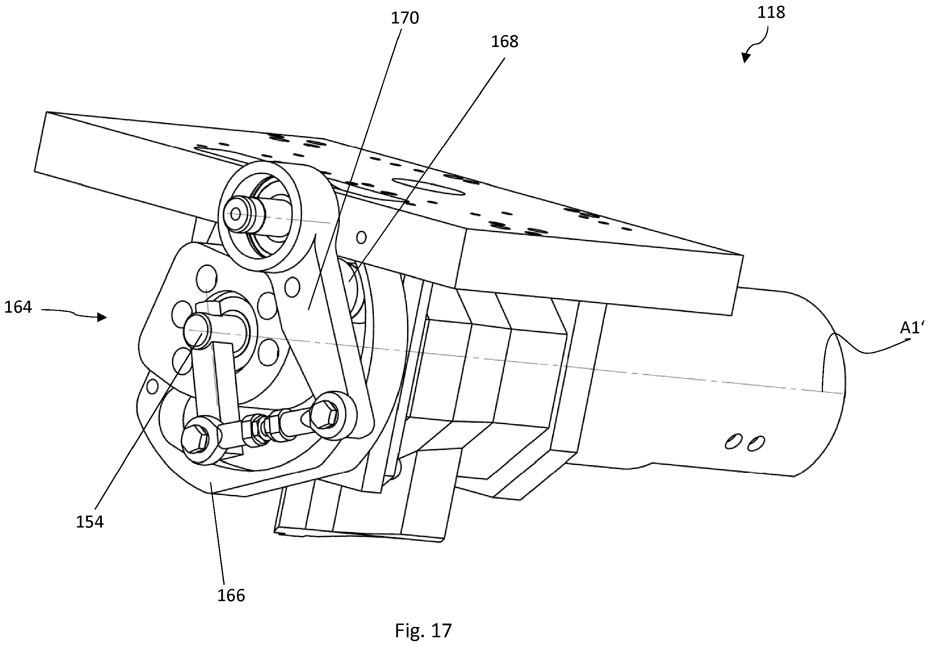

Dieser Mechanismus 64 wird nun unter Bezugnahme auf Fig. 17 näher beschrieben. In Fig. 17 ist das Ende des ersten Segments 130, an dem das zweite Segment 131 sowie die Saugvorrichtung 134 befestigt sind, aus Zwecken der Übersichtlichkeit nicht dargestellt. Der Mechanismus 164 umfasst eine Kurvenscheibe 166, die gemeinsam mit dem ersten Segment 130 um die erste Achse A1' gedreht wird. In der Querschnittsansicht in Fig. 16 ist diese Kurvenscheibe 166 ebenfalls gezeigt, allerdings ohne die weiteren Komponenten des Mechanismus 164.

Wieder Bezug nehmend auf Fig. 17 umfasst der Mechanismus 164 des Weiteren eine Kurvenrolle 168, die drehbar an einem Hebelmechanismus 170 angelenkt ist. Der Hebelmechanismus 170 wiederum ist mit der inneren Welle 154 starr verbunden, an deren anderem Ende das Kegelrad 156 angeordnet ist. Bei Drehung der Kurvenscheibe 166 um die erste Achse A1' läuft die Kurvenrolle 168 an der Kurvenscheibe 166 ab und bewirkt somit eine entsprechende Auslenkung des Hebelmechanismus 170, was wiederum zu einer Drehung der Welle 154 um die erste Achse A1' führt. Der Mechanismus 164 ist so gestaltet, dass sich die Welle 154 und somit das Kegelrad 156 in den Anfangs- und Endbereichen der Drehbewegung des ersten Segments 130 und somit der Kurvenscheibe 166 um die erste Achse A1' mit derselben Winkelgeschwindigkeit wie das erste Segment 130 mitbewegen. Auf diese Weise erfolgt zwischen Kegelrad 156 und Kegelrad 160 keine Relativbewegung, sodass auch keine Drehbewegung des zweiten Segments 131 um die zweite Achse A2" initiiert wird.

Im weiteren Verlauf der Schwenkbewegung um die erste Achse A1' hingegen wird durch den Mechanismus 164 eine gegenläufige Bewegung der Welle 154 entgegen der Drehrichtung des ersten Segments 130 bewirkt, wodurch die Drehgeschwindigkeit des zweiten Segments 131 um die zweite Achse A2" bereichsweise schneller ist als die Drehbewegung um die erste Achse A1'. Auf diese Weise gelingt es, an den Endpunkten der Schwenkbewegung um die erste Achse A1' die Drehbewegung des zweiten Segments 131 um die zweite Achse A2" auszusetzen und dies in einem Mittelbereich der Schwenkbewegung um die erste Achse A1' durch schnellere Drehung des zweiten Segments 131 um die zweite Achse A2" wieder auszugleichen. Dadurch wird gewährleistet, dass die Blisterpackungen 4 immer eine Drehbewegung um die zweite Achse A2" um 180° vollziehen.

Selbstverständlich existieren vielfältige Modifikationen der bislang beschriebenen Struktur des Saugerarms 118 und des zugehörigen Antriebs. So kann beispielsweise die Kopplung zwischen der Schwenkbewegung des ersten Segments 130 um die erste Achse A1' und der Drehbewegung des zweiten Segments 131 um die zweite Achse A2" auch mittels anderer mechanischer Komponenten gelöst werden. Außerdem ist es denkbar, zwei separate Servomotoren für den Antrieb des ersten Segments 130 und des zweiten Segments 131 vorzusehen.

Der Aufbau des Saugerarms 119 ist spiegelsymmetrisch zum Saugerarm 118, wobei das erste Segment mit 132, das zweite Segment mit 133 und die zweite Achse mit A2'" bezeichnet sind.

Bezugnehmend auf Fig. 11 bis 13 soll nun der Ablauf eines Übergabeprozesses mit der Übergabeeinheit 108 näher erläutert werden. Die Blisterpackungen 4, 6 werden an der Bereitstellposition 28 in der Stanzstation 110 nacheinander durch den ersten und zweiten Saugerarm 118, 119 der ersten Übergabeeinheit 108 aufgenommen, zur ersten bzw. zweiten Zwischenablageposition 122, 123 bewegt und dort abgelegt.

Die erste Blisterpackung 4 wird in der ersten Bereitstellposition 28 vorzugsweise von oben aufgenommen und ebenfalls von oben in der ersten Zwischenablageposition 122 abgelegt. Die erste Blisterpackung 4 ist dabei in der Bereitstellposition 28 im Bereich der Längsmittelebene L angeordnet und in der ersten Zwischenablageposition 122 bezüglich der Längsmittelebene L nach außen versetzt angeordnet. Die erste Blisterpackung 4 wird in der ersten Zwischenablageposition 122 im Vergleich zur Bereitstellposition 28 mit derselben Seite nach oben, aber um 180° um ihren Mittelpunkt gedreht abgelegt.

Für die Übergabe der zweiten Blisterpackung 6 aus der Bereitstellposition 28 hin zur zweiten Zwischenablageposition 123 mittels des zweiten Saugerarms 119 gelten exakt dieselben Aussagen wie für die Übergabe der ersten Blisterpackung 4 mittels des ersten Saugerarms 118. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Saugerarme 118, 119 vollziehen eine Schwenkbewegung um dieselbe erste Achse A1', während die Drehbewegungen ihrer zweiten Segmente 131, 133 um die jeweilige zweite Achse A2", A2'" zueinander entgegengesetzte Drehrichtungen zeigen. An einem Scheitelpunkt der Drehbewegung, wie sie im Querschnitt in Fig. 16 dargestellt ist, sind die Blisterpackungen 4, 6 vorzugsweise parallel zur Längsmittelebene L angeordnet.

Wenn die erste Übergabeeinheit 108 gemäß Fig. 11 zusammen mit einer zweiten Übergabeeinrichtung 14 verwendet wird, ist bei der Ansteuerung der beiden Übergabeeinheiten 108, 14 darauf zu achten, dass sich im Bereich der Zwischenablagepositionen 122, 123 jeweils diejenigen Saugerarme 118, 119, 24, 25 befinden, die auf die jeweils andere Zwischenablageposition 122, 123 zugreifen (Fig. 12). Bevorzugt sind also in der Darstellung der Fig. 12 der erste Saugerarm 118 der ersten Übergabeeinheit 108 und der erste Saugerarm 24 der zweiten Übergabeeinheit 14 synchron zueinander bewegt, während der zweite Saugerarm 119 der ersten Übergabeeinheit 108 und der zweite Saugerarm 25 der zweiten Übergabeeinheit 14 ebenfalls synchron zueinander bewegt werden.

Bevorzugt erfolgt das Aufnehmen der Blisterpackungen 4, 6 in der Bereitstellposition 28 von oben. Gegebenenfalls ist es auch möglich, dass die Blisterpackungen 4, 6 nicht in einer horizontalen Ausrichtung an der Bereitstellposition 28 liegen, sondern beispielsweise in einer senkrechten Ausrichtung oder unter einem schrägen Winkel zur Vertikalen bereitgestellt werden. In diesem Fall vollziehen die Saugerarme 118, 119 eine Schwenkbewegung um die erste Achse A1' lediglich über einen Winkel, der kleiner als 180° ist, in der Regel zwischen 60° und 180°. Die Übersetzung zwischen den Kegelrädern 156, 160 ist dann entsprechend anzupassen, um sicherzustellen, dass das zweite Segment 131, 133 während dieser reduzierten Schwenkbewegung um die erste Achse A1' eine vollständige 180°-Drehung um die zweite Achse A2", A2'" vollzieht.

An den Bereitstellpositionen werden die Blisterpackungen 4, 6 allgemein jeweils bevorzugt mittels einer geeigneten Halterung festgehalten, bis sie von den Saugerarmen ergriffen wurden. Die Halterung muss die Blisterpackungen rechtzeitig vor der Transferbewegung freigeben.

An den Zwischenablagepositionen werden die Blisterpackungen 4, 6 allgemein jeweils bevorzugt mittels einer geeigneten Halterung festgehalten, bis sie von den Saugerarmen ergriffen wurden. Die Halterung muss die Blisterpackungen rechtzeitig vor der Transferbewegung freigeben.

Die erfindungsgemäßen Übergabeeinheiten 108, 14 können gemeinsam in einer Vorrichtung 2 verwendet werden, wie in Fig. 12 dargestellt. Sie können aber auch jeweils mit anderen ersten oder zweiten Übergabeeinheiten verwendet werden. Schließlich ist es auch möglich, die erfindungsgemäßen Übergabeeinheiten 108, 14 alleine zu verwenden. In diesem Fall muss nicht zwangsläufig eine Zwischenablage der Blisterpackungen 4, 6 stattfinden, und es ist auch möglich, die Übergabeeinheiten 108, 14 an anderen Stellen des Verpackungsprozesses zu verwenden.

Aus diesem Grund wurden in den beigefügten Ansprüchen allgemein die Begriffe "Aufnahmeposition", "Aufnahmepositionen", "Abgabeposition" und "Abgabepositionen" verwendet. Im Rahmen der vorliegenden beispielhaften Figurenbeschreibung sind die beanspruchten "Aufnahmepositionen" die Zwischenablagepositionen 22, 23 der Übergabeeinheit 14. Die eine gemeinsame "Aufnahmeposition" ist die gemeinsame Bereitstellposition 28 der Übergabeeinheit 108. Außerdem sind die beanspruchten "Abgabepositionen" die Zwischenablagepositionen 122, 123 der Übergabeeinheit 108. Die eine gemeinsame "Abgabeposition" ist die gemeinsame Endablageposition 26 der Übergabeeinheit 14.

Bei den erfindungsgemäßen Übergabeeinheiten 14, 108 ist es außerdem möglich, lediglich einen der Saugerarme so zu gestalten, wie oben detailliert beschrieben wurde. Der andere Saugerarm könnte für eine geradlinige Übergabe von Blisterpackungen ausgestaltet sein. In diesem Fall würde der eine Saugerarm bei der Übergabe einen seitlichen Versatz der Blisterpackungen in der Form erzeugen, dass die Ablageposition mit der Ablageposition des anderen Saugerarms übereinstimmt oder dass die Aufnahmeposition mit der Aufnahmeposition des anderen Saugerarms übereinstimmt. Es findet also mittels des einen Saugerarms entweder eine Einweichung von zwei Linien auf eine Linie oder eine Ausbreitung von einer Linie auf zwei Linien statt.

Die Blisterpackungen 4, 6 enthalten in der Regel Tabletten, Kapseln oder Dragees. Die Blisterpackungen 4, 6 sind meist mit einer ebenen Deckfolie verschlossen, an der die Saugköpfe 36 angreifen können. Es ist aber auch denkbar, dass die Blisterpackungen 4, 6 nach oben offen bleiben. Dies ist besonders dann möglich, wenn nicht Tabletten, sondern andere medizinische Produkte wie Spritzen, Ampullen, Vials oder dergleichen verpackt wurden. Bei einer Blisterverpackung 4, 6 ohne Deckfolie ist es vorteilhaft, wenn die Saugköpfe 36 an die Form der Produkte angepasst werden und direkt an den in den Blisternäpfen fixierten Produkten angreifen. Die Blisterpackungen 4, 6 können auch nichtmedizinische Produkte enthalten.

## Patentansprüche

1. Übergabeeinheit (14) zum Transferieren von Blisterpackungen (4, 6) mit
einem ersten Saugerarm (24), der bewegbar ist zwischen einer ersten Aufnahmestellung zum Aufnehmen einer ersten Blisterpackung (4) von einer ersten Aufnahmeposition (22) und einer ersten Abgabestellung zum Ablegen der ersten Blisterpackung (4) in einer Abgabeposition (26), und
einem zweiten Saugerarm (25), der bewegbar ist zwischen einer zweiten Aufnahmestellung zum Aufnehmen einer zweiten Blisterpackung (6) von einer zweiten Aufnahmeposition (23) und einer zweiten Abgabestellung zum Ablegen der zweiten Blisterpackung (6) in derselben Abgabeposition (26),
wobei der erste und der zweite Saugerarm (24, 25) zu beiden Seiten einer Längsmittelebene (L) der Übergabeeinheit (14) angeordnet sind,
wobei jeder Saugerarm (24, 25) ein erstes Segment (30, 32) und ein zweites Segment (31, 33) aufweist, wobei das erste Segment (30, 32) jedes Saugerarms (24, 25) um eine zugehörige erste Achse (A1), die senkrecht zur Längsmittelebene (L) verläuft, drehbar befestigt ist,
wobei das erste Segment (30, 32) jedes Saugerarms einen Abschnitt aufweist, an dem das zweite Segment (31, 33) drehbar um eine zur ersten Achse (A1) im Wesentlichen senkrecht verlaufende ortsveränderliche zweite Achse (A2, A2') befestigt ist, wobei an dem zweiten Segment (31, 33) eine Saugvorrichtung (34) zum Ansaugen und Halten einer Blisterpackung (4, 6) angeordnet ist,
wobei die Saugerarme (24, 25) derart ausgestaltet und angesteuert sind, dass die Bewegung der Saugerarme (24, 25) von der ersten oder zweiten Aufnahmestellung zur ersten oder zweiten Abgabestellung und zurück eine kombinierte Bewegung ist, die sich zumindest aus einer ersten Drehbewegung des ersten Segments (30, 32) und des zweiten Segments (31, 33) um die erste Achse (A1) und einer zweiten Drehbewegung des zweiten Segments (31, 33) um die zweite Achse (A2, A2') zusammensetzt,
wobei die Saugerarme (24, 25) derart ausgestaltet und angesteuert sind, dass die Blisterpackungen (4, 6) in der ersten und zweiten Aufnahmeposition (22, 23) von den Saugvorrichtungen (34) des ersten und zweiten Saugerarms (24, 25) an einer ebenen Fläche angesaugt und an der Abgabeposition (26) mit der ebenen Fläche nach oben abgelegt werden,
wobei die erste und zweite Aufnahmeposition (22, 23) bezüglich der Längsmittelebene (L) nach außen versetzt angeordnet sind und die Abgabeposition (26) im Bereich der Längsmittelebene (L) angeordnet ist,
wobei die zweite Achse (A2) des ersten Saugerarms (24) derart angeordnet ist, dass sich die zweite Achse (A2) des ersten Saugerarms (24) während der ersten Drehbewegung des ersten Segments (30) des ersten Saugerarms (24) in einer ersten Ebene (E1) bewegt, die die erste Aufnahmeposition (22) oder deren seitliche Projektion in einer ersten geraden Linie (L1) schneidet, die seitlich versetzt zur Mitte (M1) der ersten Aufnahmeposition (22) ist, und
wobei die zweite Achse (A2') des zweiten Saugerarms (25) derart angeordnet ist, dass sich die zweite Achse (A2') des zweiten Saugerarms (25) während der ersten Drehbewegung des ersten Segments (32) des zweiten Saugerarms (25) in einer zweiten Ebene (E2) bewegt, die die zweite Aufnahmeposition (23) oder deren seitliche Projektion in einer zweiten geraden Linie (L2) schneidet, die seitlich versetzt zur Mitte (M2) der zweiten Aufnahmeposition (23) ist.

2. Übergabeeinheit (14) nach Anspruch 1, **dadurch gekennzeichnet, dass** die Saugerarme (24, 25) derart ausgestaltet und angesteuert sind, dass die Blisterpackungen (4, 6) an der ersten und zweiten Aufnahmeposition (22, 23) von den Saugvorrichtungen (34) des ersten und zweiten Saugerarms (24, 25) von oben aufgenommen und ebenfalls von oben in die Abgabeposition (26) abgelegt werden.

3. Übergabeeinheit (14) nach Anspruch 1 oder 2, **dadurch gekennzeichnet, dass** das zweite Segment (31, 33) des ersten oder zweiten Saugerarms (24, 25) in der ersten oder zweiten Aufnahmestellung jeweils bezüglich der Längsmittelebene (L) nach außen geschwenkt ist, und dass das zweite Segment (31, 33) des ersten oder zweiten Saugerarms (24, 25) in der ersten oder zweiten Abgabestellung jeweils bezüglich der Längsmittelebene (L) nach innen geschwenkt ist.

4. Übergabeeinheit (14) nach einem der vorhergehenden Ansprüche, **dadurch gekennzeichnet, dass** die zweiten Segmente (31, 33) und somit die an den Saugvorrichtungen (34) gehaltenen Blisterpackungen (4, 6) eine Drehbewegung um die zweite Achse (A2, A2') von im Wesentlichen 180° ausführen, wenn sich die Saugerarme (24, 25) von der ersten oder zweiten Aufnahmestellung zur ersten oder zweiten Abgabestellung oder umgekehrt bewegen.

5. Übergabeeinheit (14) nach einem der vorhergehenden Ansprüche, **dadurch gekennzeichnet, dass** die ersten Segmente (30, 32) eine Drehbewegung um die erste Achse (A1) von 60° bis 180°, bevorzugt 120° bis 180° ausführen, wenn sich die Saugerarme (24, 25) von der ersten oder zweiten Aufnahmestellung zur ersten oder zweiten Abgabestellung oder umgekehrt bewegen.

6. Übergabeeinheit (108) zum Transferieren von Blisterpackungen (4, 6) mit
einem ersten Saugerarm (118), der bewegbar ist zwischen einer ersten Aufnahmestellung zum Aufnehmen einer ersten Blisterpackung (4) von einer Aufnahmeposition (28) und einer ersten Abgabestellung zum Ablegen der ersten Blisterpackung (4) in einer ersten Abgabeposition (122), und
einem zweiten Saugerarm (119), der bewegbar ist zwischen einer zweiten Aufnahmestellung zum Aufnehmen einer zweiten Blisterpackung (6) von derselben Aufnahmeposition (28) und einer zweiten Abgabestellung zum Ablegen der zweiten Blisterpackung (6) in einer zweiten Abgabeposition (123),
wobei der erste und der zweite Saugerarm (118, 119) zu beiden Seiten einer Längsmittelebene (L) der Übergabeeinheit (108) angeordnet sind,
wobei jeder Saugerarm (118, 119) ein erstes Segment (130, 132) und ein zweites Segment (131, 133) aufweist, wobei das erste Segment (130, 132) jedes Saugerarms (118, 119) um eine zugehörige erste Achse (A1'), die senkrecht zur Längsmittelebene (L) verläuft, drehbar befestigt ist,
wobei das erste Segment (130, 132) jedes Saugerarms (118, 119) einen Abschnitt aufweist, an dem das zweite Segment (131, 133) drehbar um eine zur ersten Achse (A1') im Wesentlichen senkrecht verlaufende ortsveränderliche zweite Achse (A2", A2"') befestigt ist, wobei an dem zweiten Segment (131, 133) eine Saugvorrichtung (134) zum Ansaugen und Halten einer Blisterpackung (4, 6) angeordnet ist,
wobei die Saugerarme (118, 119) derart ausgestaltet und angesteuert sind, dass die Bewegung der Saugerarme (118, 119) von der ersten oder zweiten Aufnahmestellung zur ersten oder zweiten Abgabestellung und zurück eine kombinierte Bewegung ist, die sich zumindest aus einer ersten Drehbewegung des ersten Segments (130, 132) und des zweiten Segments (131, 133) um die erste Achse (A1') und einer zweiten Drehbewegung des zweiten Segments (131, 133) um die zweite Achse (A2", A2"') zusammensetzt,
wobei die Saugerarme (118, 119) derart ausgestaltet und angesteuert sind, dass die Blisterpackungen (4, 6) in der Aufnahmeposition (28) von den Saugvorrichtungen (134) des ersten und zweiten Saugerarms (118, 119) an einer ebenen Fläche angesaugt und an der ersten und zweiten Abgabeposition (122, 123) mit der ebenen Fläche nach oben abgelegt werden,
wobei die Aufnahmeposition (28) im Bereich der Längsmittelebene (L) angeordnet ist und die erste und zweite Abgabeposition (122, 123) bezüglich der Längsmittelebene (L) nach außen versetzt angeordnet sind,
wobei die zweite Achse (A2") des ersten Saugerarms (118) derart angeordnet ist, dass sich die zweite Achse (A2") des ersten Saugerarms (118) während der ersten Drehbewegung des ersten Segments (130) des ersten Saugerarms (118) in einer ersten Ebene (E1') bewegt, die die erste Abgabeposition (122) oder deren seitliche Projektion in einer ersten geraden Linie (L1') schneidet, die seitlich versetzt zur Mitte (M1') der ersten Abgabeposition (122) ist, und
wobei die zweite Achse (A2"') des zweiten Saugerarms (119) derart angeordnet ist, dass sich die zweite Achse (A2"') des zweiten Saugerarms (119) während der ersten Drehbewegung des ersten Segments (132) des zweiten Saugerarms (119) in einer zweiten Ebene (E2') bewegt, die die zweite Abgabeposition (123) oder deren seitliche Projektion in einer zweiten geraden Linie (L2') schneidet, die seitlich versetzt zur Mitte (M2') der zweiten Abgabeposition (123) ist.

7. Übergabeeinheit (108) nach Anspruch 6, **dadurch gekennzeichnet, dass** die Saugerarme (118, 119) derart ausgestaltet und angesteuert sind, dass die Blisterpackungen (4, 6) an der Aufnahmeposition (28) von den Saugvorrichtungen (134) des ersten und zweiten Saugerarms (118, 119) von oben aufgenommen und ebenfalls von oben in die erste und zweite Abgabeposition (122, 123) abgelegt werden.

8. Übergabeeinheit (108) nach Anspruch 6 oder 7, **dadurch gekennzeichnet, dass** das zweite Segment (131, 133) des ersten oder zweiten Saugerarms (118, 119) in der ersten oder zweiten Aufnahmestellung jeweils bezüglich der Längsmittelebene (L) nach innen geschwenkt ist, und dass das zweite Segment (131, 133) des ersten oder zweiten Saugerarms (118, 119) in der ersten oder zweiten Abgabestellung jeweils bezüglich der Längsmittelebene (L) nach außen geschwenkt ist.

9. Übergabeeinheit (108) nach einem der Ansprüche 6 bis 8, **dadurch gekennzeichnet, dass** die zweiten Segmente (131, 133) und somit die an den Saugvorrichtungen (134) gehaltenen Blisterpackungen (4, 6) eine Drehbewegung um die zweite Achse (A2", A2"') von im Wesentlichen 180° ausführen, wenn sich die Saugerarme (118, 119) von der ersten oder zweiten Aufnahmestellung zur ersten oder zweiten Abgabestellung oder umgekehrt bewegen.

10. Übergabeeinheit (108) nach einem der Ansprüche 6 bis 9, **dadurch gekennzeichnet, dass** die ersten Segmente (130, 132) eine Drehbewegung um die erste Achse (A1') von 60° bis 180°, bevorzugt 120° bis 180° ausführen, wenn sich die Saugerarme (118, 119) von der ersten oder zweiten Aufnahmestellung zur ersten oder zweiten Abgabestellung oder umgekehrt bewegen.

11. Übergabeeinheit (14, 108) nach einem der vorhergehenden Ansprüche, **dadurch gekennzeichnet, dass** der erste und zweite Saugerarm (24, 25; 118, 119) derart angesteuert sind, dass der erste und zweite Saugerarm (24, 25; 118, 119) gegenläufige hin- und hergehende Schwenkbewegungen ausführen.

12. Übergabeeinheit (14, 108) nach einem der vorhergehenden Ansprüche, **dadurch gekennzeichnet, dass** die Saugerarme (24, 25; 118, 119) parallel zur ersten Achse (A1; A1') verschiebbar gelagert sind.

13. Übergabeeinheit (14, 108) nach einem der vorhergehenden Ansprüche, **dadurch gekennzeichnet, dass** die Saugvorrichtung (34; 134) jedes Saugerarms (24, 25; 118, 119) mindestens einen Saugkopf (36; 136) umfasst, der mittels mindestens eines Trägerarms (38; 138) am zweiten Segment (31, 33; 131, 133) befestigt ist.

14. Übergabeeinheit (14, 108) nach Anspruch 13, **dadurch gekennzeichnet, dass** der mindestens eine Trägerarm (38; 138) starr an dem zweiten Segment (31, 33; 131, 133) befestigt ist.

15. Übergabeeinheit (14, 108) nach Anspruch 13 oder 14, **dadurch gekennzeichnet, dass** der mindestens eine Trägerarm (38; 138) in der ersten oder zweiten Aufnahmestellung und in der ersten oder zweiten Abgabestellung vom zweiten Segment (31, 33; 131, 133) schräg nach unten abragt.

16. Verfahren zum Transferieren von Blisterpackungen (4, 6) von einer ersten und zweiten Aufnahmeposition (22, 23) zu einer gemeinsamen Abgabeposition (26) mittels einer Übergabeeinheit (14), mit folgenden Schritten:
- Bereitstellen einer ersten und einer zweiten Blisterpackung (4, 6) in einer ersten und einer zweiten Aufnahmeposition (22, 23), wobei die Blisterpackungen (4, 6) in der ersten und zweiten Aufnahmeposition (22, 23) in einer Reihe, die quer zu einer Längsmittelebene (L) der Übergabeeinheit (14) verläuft, nebeneinander angeordnet sind;
- Aufnehmen der ersten Blisterpackung (4) in der ersten Aufnahmeposition (22), Bewegen der ersten Blisterpackung (4) und Ablegen der ersten Blisterpackung (4) in der Abgabeposition (26), wobei die erste Blisterpackung (4) in der Abgabeposition (26) von oben abgelegt wird, wobei die erste Blisterpackung (4) in der ersten Aufnahmeposition (22) bezüglich der Längsmittelebene (L) nach außen versetzt angeordnet ist, und wobei die erste Blisterpackung (4) in der Abgabeposition (26) im Vergleich zur ersten Aufnahmeposition (22) um 180° um ihren Mittelpunkt gedreht abgelegt wird; und
- Aufnehmen der zweiten Blisterpackung (6) in der zweiten Aufnahmeposition (23), Bewegen der zweiten Blisterpackung (6) und Ablegen der zweiten Blisterpackung (6) in der Abgabeposition (26), wobei die zweite Blisterpackung (6) in der Abgabeposition (26) von oben abgelegt wird, wobei die zweite Blisterpackung (6) in der zweiten Aufnahmeposition (23) bezüglich der Längsmittelebene (L) nach außen versetzt angeordnet ist, und wobei die zweite Blisterpackung (6) in der Abgabeposition (26) im Vergleich zur zweiten Aufnahmeposition (23) um 180° um ihren Mittelpunkt gedreht abgelegt wird.

17. Verfahren nach Anspruch 16, **dadurch gekennzeichnet, dass** die Blisterpackungen (4, 6) an der ersten und zweiten Aufnahmeposition (22, 23) von oben aufgenommen werden, und dass die Blisterpackungen (4, 6) in der ersten und zweiten Aufnahmeposition (22, 23) und in der Abgabeposition (26) jeweils mit derselben Seite nach oben angeordnet sind.

18. Verfahren nach Anspruch 16 oder 17, **dadurch gekennzeichnet, dass** die Abgabeposition (26) im Bereich der Längsmittelebene (L) angeordnet ist, und dass die erste und zweite Blisterpackung (4, 6) während des Bewegens von der ersten und zweiten Aufnahmeposition (22, 23) zur Abgabeposition (26) einen entgegengesetzten seitlichen Versatz quer zur Längsmittelebene (L) vollziehen.

19. Verfahren zum Transferieren von Blisterpackungen (4, 6) von einer gemeinsamen Aufnahmeposition (28) zu einer ersten und zweiten Abgabeposition (122, 123) mittels einer Übergabeeinheit (108), mit folgenden Schritten:
- Bereitstellen einer ersten Blisterpackung (4) in der Aufnahmeposition (28);
- Aufnehmen der ersten Blisterpackung (4) in der Aufnahmeposition (28), Bewegen der ersten Blisterpackung (4) und Ablegen der ersten Blisterpackung (4) in der ersten Abgabeposition (122), wobei die erste Blisterpackung (4) in der ersten Abgabeposition (122) von oben abgelegt wird, wobei die erste Blisterpackung (4) in der ersten Abgabeposition (122) bezüglich einer Längsmittelebene (L) der Übergabeeinheit (108) nach außen versetzt angeordnet ist, und wobei die erste Blisterpackung (4) in der ersten Abgabeposition (122) im Vergleich zur Aufnahmeposition (28) um 180° um ihren Mittelpunkt gedreht abgelegt wird;
- Bereitstellen der zweiten Blisterpackung (6) in der Aufnahmeposition (28); und
- Aufnehmen der zweiten Blisterpackung (6) in der Aufnahmeposition (28), Bewegen der zweiten Blisterpackung (6) und Ablegen der zweiten Blisterpackung (6) in der zweiten Abgabeposition (123), wobei die zweite Blisterpackung (6) in der zweiten Abgabeposition (123) von oben abgelegt wird, wobei die zweite Blisterpackung (6) in der zweiten Abgabeposition (123) bezüglich der Längsmittelebene (L) nach außen versetzt angeordnet ist, wobei die zweite Blisterpackung (6) in der zweiten Abgabeposition (123) im Vergleich zur Aufnahmeposition (28) um 180° um ihren Mittelpunkt gedreht abgelegt wird, und wobei die Blisterpackungen (4, 6) in der ersten und zweiten Abgabeposition (122, 123) in einer Reihe, die quer zur Längsmittelebene (L) verläuft, nebeneinander angeordnet sind.

20. Verfahren nach Anspruch 19, **dadurch gekennzeichnet, dass** die Blisterpackungen (4, 6) an der Aufnahmeposition (28) von oben aufgenommen werden, und dass die Blisterpackungen (4, 6) in der Aufnahmeposition (28) und in der ersten und zweiten Abgabeposition (122, 123) jeweils mit derselben Seite nach oben angeordnet sind.

21. Verfahren nach Anspruch 19 oder 20, **dadurch gekennzeichnet, dass** die Aufnahmeposition (28) im Bereich der Längsmittelebene (L) angeordnet ist, und dass die erste und zweite Blisterpackung (4, 6) während des Bewegens von der Aufnahmeposition (28) zur ersten und zweiten Abgabeposition (122, 123) einen entgegengesetzten seitlichen Versatz quer zur Längsmittelebene (L) vollziehen.

## Claims

1. Transfer unit (14) for transferring blister packs (4, 6),
having a first sucker arm (24), which can be moved between a first receiving location for receiving a first blister pack (4) from a first receiving position (22) and a first discharging location for setting down the first blister pack (4) in a discharging position (26), and
having a second sucker arm (25), which can be moved between a second receiving location for receiving a second blister pack (6) from a second receiving position (23) and a second discharging location for setting down the second blister pack (6) in the same discharging position (26),
wherein the first and the second sucker arms (24, 25) are arranged on either side of a longitudinal centre plane (L) of the transfer unit (14),
wherein each sucker arm (24, 25) has a first segment (30, 32) and a second segment (31, 33), wherein the first segment (30, 32) of each sucker arm (24, 25) is fastened such that it can be rotated about an associated first axis (A1), which runs perpendicularly in relation to the longitudinal centre plane (L),
wherein the first segment (30, 32) of each sucker arm has a portion on which the second segment (31, 33) is fastened such that it can be rotated about a second axis (A2, A2') which can be altered in location and runs essentially perpendicularly in relation to the first axis (A1), wherein a suction device (34) for attaching a blister pack (4, 6) by suction, and retaining the same, is arranged on the second segment (31, 33),
wherein the sucker arms (24, 25) are configured and activated such that the movement of the sucker arms (24, 25) from the first or second receiving location to the first or second discharging location, and back, is a combined movement which is made up at least of a first rotary movement of the first segment (30, 32) and of the second segment (31, 33) about the first axis (A1) and of a second rotary movement of the second segment (31, 33) about the second axis (A2, A2'),
wherein the sucker arms (24, 25) are configured and activated such that, in the first and second receiving positions (22, 23), a planar surface of the blister packs (4, 6) is attached by suction by the suction devices (34) of the first and second sucker arms (24, 25) and, in the discharging position (26), said blister packs are set down with the planar surface upwards,
wherein the first and second receiving positions (22, 23) are arranged offset outwards in relation to the longitudinal centre plane (L) and the discharging position (26) is arranged in the region of the longitudinal centre plane (L),
wherein the second axis (A2) of the first sucker arm (24) is arranged such that, during the first rotary movement of the first segment (30) of the first sucker arm (24), the second axis (A2) of the first sucker arm (24) moves in a first plane (E1), which intersects the first receiving position (22) or the lateral projection thereof in a first straight line (L1), which is offset laterally in relation to the centre (M1) of the first receiving position (22), and
wherein the second axis (A2') of the second sucker arm (25) is arranged such that, during the first rotary movement of the first segment (32) of the second sucker arm (25), the second axis (A2') of the second sucker arm (25) moves in a second plane (E2), which intersects the second receiving position (23) or the lateral projection thereof in a second straight line (L2), which is offset laterally in relation to the centre (M2) of the second receiving position (23) .

2. Transfer unit (14) according to Claim 1, **characterized in that** the sucker arms (24, 25) are configured and activated such that, in the first and second receiving positions (22, 23), the blister packs (4, 6) are received by the suction devices (34) of the first and second sucker arms (24, 25) from above and are set down in the discharging position (26) likewise from above.

3. Transfer unit (14) according to Claim 1 or 2, **characterized in that**, in the first or second receiving location, the second segment (31, 33) of the first or second sucker arm (24, 25) has been pivoted outwards in each case in relation to the longitudinal centre plane (L), and **in that**, in the first or second discharging location, the second segment (31, 33) of the first or second sucker arm (24, 25) has been pivoted inwards in each case in relation to the longitudinal centre plane (L).

4. Transfer unit (14) according to one of the preceding claims, **characterized in that** the second segments (31, 33), and therefore the blister packs (4, 6) retained on the suction devices (34), execute a rotary movement of essentially 180° about the second axis (A2, A2') when the sucker arms (24, 25) move from the first or second receiving location to the first or second discharging location, or vice versa.

5. Transfer unit (14) according to one of the preceding claims, **characterized in that** the first segments (30, 32) execute a rotary movement of 60° to 180°, preferably 120° to 180°, about the first axis (A1) when the sucker arms (24, 25) move from the first or second receiving location to the first or second discharging location, or vice versa.

6. Transfer unit (108) for transferring blister packs (4, 6),
having a first sucker arm (118), which can be moved between a first receiving location for receiving a first blister pack (4) from a receiving position (28) and a first discharging location for setting down the first blister pack (4) in a first discharging position (122), and
having a second sucker arm (119), which can be moved between a second receiving location for receiving a second blister pack (6) from the same receiving position (28) and a second discharging location for setting down the second blister pack (6) in a second discharging position (123),
wherein the first and the second sucker arms (118, 119) are arranged on either side of a longitudinal centre plane (L) of the transfer unit (108),
wherein each sucker arm (118, 119) has a first segment (130, 132) and a second segment (131, 133), wherein the first segment (130, 132) of each sucker arm (118, 119) is fastened such that it can be rotated about an associated first axis (Al'), which runs perpendicularly in relation to the longitudinal centre plane (L),
wherein the first segment (130, 132) of each sucker arm (118, 119) has a portion on which the second segment (131, 133) is fastened such that it can be rotated about a second axis (A2'', A2''') which can be altered in location and runs essentially perpendicularly in relation to the first axis (Al'), wherein a suction device (134) for attaching a blister pack (4, 6) by suction, and retaining the same, is arranged on the second segment (131, 133),
wherein the sucker arms (118, 119) are configured and activated such that the movement of the sucker arms (118, 119) from the first or second receiving location to the first or second discharging location, and back, is a combined movement which is made up at least of a first rotary movement of the first segment (130, 132) and of the second segment (131, 133) about the first axis (A1') and of a second rotary movement of the second segment (131, 133) about the second axis (A2'', A2'''),
wherein the sucker arms (118, 119) are configured and activated such that, in the receiving position (28), a planar surface of the blister packs (4, 6) is attached by suction by the suction devices (134) of the first and second sucker arms (118, 119) and, in the first and second discharging positions (122, 123), said blister packs are set down with the planar surface upwards,
wherein the receiving position (28) is arranged in the region of the longitudinal centre plane (L) and the first and second discharging positions (122, 123) are arranged offset outwards in relation to the longitudinal centre plane (L),
wherein the second axis (A2'') of the first sucker arm (118) is arranged such that, during the first rotary movement of the first segment (130) of the first sucker arm (118), the second axis (A2'') of the first sucker arm (118) moves in a first plane (E1'), which intersects the first discharging position (122) or the lateral projection thereof in a first straight line (L1'), which is offset laterally in relation to the centre (M1') of the first discharging position (122), and
wherein the second axis (A2"') of the second sucker arm (119) is arranged such that, during the first rotary movement of the first segment (132) of the second sucker arm (119), the second axis (A2"') of the second sucker arm (119) moves in a second plane (E2'), which intersects the second discharging position (123) or the lateral projection thereof in a second straight line (L2'), which is offset laterally in relation to the centre (M2') of the second discharging position (123).

7. Transfer unit (108) according to Claim 6, **characterized in that** the sucker arms (118, 119) are configured and activated such that, in the receiving position (28), the blister packs (4, 6) are received by the suction devices (134) of the first and second sucker arms (118, 119) from above and are set down in the first and second discharging positions (122, 123) likewise from above.

8. Transfer unit (108) according to Claim 6 or 7, **characterized in that**, in the first or second receiving location, the second segment (131, 133) of the first or second sucker arm (118, 119) has been pivoted inwards in each case in relation to the longitudinal centre plane (L), and **in that**, in the first or second discharging location, the second segment (131, 133) of the first or second sucker arm (118, 119) has been pivoted outwards in each case in relation to the longitudinal centre plane (L).

9. Transfer unit (108) according to one of Claims 6 to 8, **characterized in that** the second segments (131, 133), and therefore the blister packs (4, 6) retained on the suction devices (134), execute a rotary movement of essentially 180° about the second axis (A2'', A2"') when the sucker arms (118, 119) move from the first or second receiving location to the first or second discharging location, or vice versa.

10. Transfer unit (108) according to one of Claims 6 to 9, **characterized in that** the first segments (130, 132) execute a rotary movement of 60° to 180°, preferably 120° to 180°, about the first axis (A1') when the sucker arms (118, 119) move from the first or second receiving location to the first or second discharging location, or vice versa.

11. Transfer unit (14, 108) according to one of the preceding claims, **characterized in that** the first and second sucker arms (24, 25; 118, 119) are activated such that the first and second sucker arms (24, 25; 118, 119) execute pivoting movements back and forth in opposite directions.

12. Transfer unit (14, 108) according to one of the preceding claims, **characterized in that** the sucker arms (24, 25; 118, 119) are mounted such that they can be displaced parallel to the first axis (A1; A1').

13. Transfer unit (14, 108) according to one of the preceding claims, **characterized in that** the suction device (34; 134) of each sucker arm (24, 25; 118, 119) comprises at least one suction head (36; 136), which is fastened on the second segment (31, 33; 131, 133) by means of at least one carrier arm (38; 138) .

14. Transfer unit (14, 108) according to Claim 13, **characterized in that** the at least one carrier arm (38; 138) is fastened rigidly on the second segment (31, 33; 131, 133).

15. Transfer unit (14, 108) according to Claim 13 or 14, **characterized in that**, in the first or second receiving location and in the first or second discharging location, the at least one carrier arm (38; 138) projects obliquely downwards from the second segment (31, 33; 131, 133).

16. Method for transferring blister packs (4, 6) from a first and second receiving position (22, 23) to a common discharging position (26) by means of a transfer unit (14), having the following steps:
- providing a first and a second blister pack (4, 6) in a first and a second receiving position (22, 23), wherein, in the first and second receiving positions (22, 23), the blister packs (4, 6) are arranged one beside the other in a row which runs transversely in relation to a longitudinal centre plane (L) of the transfer unit (14);
- receiving the first blister pack (4) in the first receiving position (22), moving the first blister pack (4) and setting down the first blister pack (4) in the discharging position (26), wherein the first blister pack (4) is set down in the discharging position (26) from above, wherein, in the first receiving position (22), the first blister pack (4) is arranged offset outwards in relation to the longitudinal centre plane (L), and wherein the first blister pack (4) is set down in the discharging position (26), in comparison with the first receiving position (22), in a state in which it has been rotated through 180° about its centre point; and
- receiving the second blister pack (6) in the second receiving position (23), moving the second blister pack (6) and setting down the second blister pack (6) in the discharging position (26), wherein the second blister pack (6) is set down in the discharging position (26) from above, wherein, in the second receiving position (23), the second blister pack (6) is arranged offset outwards in relation to the longitudinal centre plane (L), and wherein the second blister pack (6) is set down in the discharging position (26), in comparison with the second receiving position (23), in a state in which it has been rotated through 180° about its centre point.

17. Method according to Claim 16, **characterized in that**, in the first and second receiving positions (22, 23), the blister packs (4, 6) are received from above, and **in that**, in the first and second receiving positions (22, 23) and in the discharging position (26), the blister packs (4, 6) are arranged in each case with the same side upwards.

18. Method according to Claim 16 or 17, **characterized in that** the discharging position (26) is arranged in the region of the longitudinal centre plane (L), and **in that**, as they move from the first and second receiving positions (22, 23) to the discharging position (26), the first and second blister packs (4, 6) perform a lateral offsetting movement counter to one another in a direction transverse to the longitudinal centre plane (L).

19. Method for transferring blister packs (4, 6) from a common receiving position (28) to a first and second discharging position (122, 123) by means of a transfer unit (108), having the following steps:
- providing a first blister pack (4) in the receiving position (28);
- receiving the first blister pack (4) in the receiving position (28), moving the first blister pack (4) and setting down the first blister pack (4) in the first discharging position (122), wherein the first blister pack (4) is set down in the first discharging position (122) from above, wherein, in the first discharging position (122), the first blister pack (4) is arranged offset outwards in relation to a longitudinal centre plane (L) of the transfer unit (108), and wherein the first blister pack (4) is set down in the first discharging position (122), in comparison with the receiving position (28), in a state in which it has been rotated through 180° about its centre point;
- providing the second blister pack (6) in the receiving position (28); and
- receiving the second blister pack (6) in the receiving position (28), moving the second blister pack (6) and setting down the second blister pack (6) in the second discharging position (123), wherein the second blister pack (6) is set down in the second discharging position (123) from above, wherein, in the second discharging position (123), the second blister pack (6) is arranged offset outwards in relation to the longitudinal centre plane (L), wherein the second blister pack (6) is set down in the second discharging position (123), in comparison with the receiving position (28), in a state in which it has been rotated through 180° about its centre point, and wherein, in the first and second discharging positions (122, 123), the blister packs (4, 6) are arranged one beside the other in a row which runs transversely in relation to the longitudinal centre plane (L).

20. Method according to Claim 19, **characterized in that**, in the receiving position (28), the blister packs (4, 6) are received from above, and **in that**, in the receiving position (28) and in the first and second discharging positions (122, 123), the blister packs (4, 6) are arranged in each case with the same side upwards.

21. Method according to Claim 19 or 20, **characterized in that** the receiving position (28) is arranged in the region of the longitudinal centre plane (L), and **in that**, as they move from the receiving position (28) to the first and second discharging positions (122, 123), the first and second blister packs (4, 6) perform a lateral offsetting movement counter to one another in a direction transverse to the longitudinal centre plane (L).

## Revendications

1. Unité de transfert (14) pour transférer des emballages blister (4, 6) avec
un premier bras à ventouse (24), qui peut être déplacé entre une première position de réception pour recevoir un premier emballage blister (4) provenant d'une première position de réception (22) et une première position de dépôt pour déposer le premier emballage blister (4) dans une position de dépôt (26), et
un deuxième bras à ventouse (25), qui peut être déplacé entre une deuxième position de réception pour recevoir un deuxième emballage blister (6) provenant d'une deuxième position de réception (23) et une deuxième position de dépôt pour déposer le deuxième emballage blister (6) dans la même position de dépôt (26),
dans laquelle le premier et le deuxième bras à ventouse (24, 25) sont disposés vers deux côtés d'un plan central longitudinal (L) de l'unité de transfert (14),
dans laquelle chaque bras à ventouse (24, 25) présente un premier segment (30, 32) et un deuxième segment (31, 33), dans laquelle le premier segment (30, 32) de chaque bras à ventouse (24, 25) est fixé de manière à pouvoir tourner autour d'un premier axe (A1) associé, qui s'étend de manière perpendiculaire par rapport au plan central longitudinal (L),
dans laquelle le premier segment (30, 32) de chaque bras à ventouse présente une section, au niveau de laquelle le deuxième segment (31, 33) est fixé de manière à pouvoir tourner autour d'un deuxième axe (A2, A2') à emplacement variable s'étendant de manière sensiblement perpendiculaire par rapport au premier axe (A1), dans laquelle un dispositif d'aspiration (34) pour aspirer et maintenir un emballage blister (4, 6) est disposé au niveau du deuxième segment (31, 33),
dans laquelle les bras à ventouse (24, 25) sont configurés et pilotés de telle manière que le déplacement des bras à ventouse (24, 25) de la première ou la deuxième position de réception à la première ou la deuxième position de dépôt et inversement est un déplacement combiné, qui se compose au moins d'un premier déplacement par rotation du premier segment (30, 32) et du deuxième segment (31, 33) autour du premier axe (A1) et d'un deuxième déplacement par rotation du deuxième segment (31, 33) autour du deuxième axe (A2, A2'),
dans laquelle les bras à ventouse (24, 25) sont configurés et pilotés de telle manière que les emballages blister (4, 6) sont aspirés dans la première et la deuxième position de réception (22, 23) par les dispositifs d'aspiration (34) du premier et du deuxième bras à ventouse (24, 25) au niveau d'une surface plane et sont déposés vers le haut avec la surface plane au niveau de la position de dépôt (26) ,
dans laquelle la première et la deuxième position de réception (22, 23) sont disposées de manière décalée vers l'extérieur par rapport au plan central longitudinal (L) et la position de dépôt (26) est disposée dans la zone du plan central longitudinal (L),
dans laquelle le deuxième axe (A2) du premier bras à ventouse (24) est disposé de telle manière que le deuxième axe (A2) du premier bras à ventouse (24) se déplace au cours du premier déplacement par rotation du premier segment (30) du premier bras à ventouse (24) dans un premier plan (E1), qui coupe la première position de réception (22) ou sa projection latérale en une première ligne rectiligne (L1) qui est décalée latéralement par rapport au centre (M1) de la première position de réception (22), et
dans laquelle le deuxième axe (A2') du deuxième bras à ventouse (25) est disposé de telle manière que le deuxième axe (A2') du deuxième bras à ventouse (25) se déplace au cours du premier déplacement par rotation du premier segment (32) du deuxième bras à ventouse (25) dans un deuxième plan (E2), qui coupe la deuxième position de réception (23) ou sa projection latérale en une deuxième ligne rectiligne (L2), qui est latéralement décalée par rapport au centre (M2) de la deuxième position de réception (23) .

2. Unité de transfert (14) selon la revendication 1, **caractérisée en ce que** les bras à ventouse (24, 25) sont configurés et pilotés de telle manière que les emballages blister (4, 6) sont reçus depuis le haut au niveau de la première et de la deuxième position de réception (22, 23) par les dispositifs d'aspiration (34) du premier et du deuxième bras à ventouse (24, 25) et sont déposés également depuis le haut dans la position de dépôt (26).

3. Unité de transfert (14) selon la revendication 1 ou 2, **caractérisée en ce que** le deuxième segment (31, 33) du premier ou du deuxième bras à ventouse (24, 25) est pivoté vers l'extérieur dans la première ou la deuxième position de réception respectivement par rapport au plan central longitudinal (L), et **en ce que** le deuxième segment (31, 33) du premier ou du deuxième bras à ventouse (24, 25) est pivoté vers l'intérieur dans la première ou la deuxième position de dépôt respectivement par rapport au plan central longitudinal (L).

4. Unité de transfert (14) selon l'une quelconque des revendications précédentes, **caractérisée en ce que** les deuxièmes segments (31, 33) et ainsi les emballages blister (4, 6) maintenus au niveau des dispositifs d'aspiration (34) exécutent un déplacement par rotation autour du deuxième axe (A2, A2') de sensiblement 180° quand les bras à ventouse (24, 25) se déplacent de la première ou la deuxième position de réception à la première ou la deuxième position de dépôt, ou inversement.

5. Unité de transfert (14) selon l'une quelconque des revendications précédentes, **caractérisée en ce que** les premiers segments (30, 32) exécutent un déplacement par rotation autour du premier axe (A1) de 60° à 180°, de manière préférée de 120° à 180° quand les bras à ventouse (24, 25) se déplacent de la première ou la deuxième position de réception à la première ou la deuxième position de dépôt ou inversement.

6. Unité de transfert (108) pour transférer des emballages blister (4, 6) avec
un premier bras à ventouse (118), qui peut être déplacé entre une première position de réception pour recevoir un premier emballage blister (4) provenant d'une position de réception (28) et une première position de dépôt pour déposer le premier emballage blister (4) dans une première position de dépôt (122), et
un deuxième bras à ventouse (119), qui peut être déplacé entre une deuxième position de réception pour recevoir un deuxième emballage blister (6) provenant de la même position de réception (28) et une deuxième position de dépôt pour déposer le deuxième emballage blister (6) dans une deuxième position de dépôt (123),
dans laquelle le premier et le deuxième bras à ventouse (118, 119) sont disposés vers deux côtés d'un plan central longitudinal (L) de l'unité de transfert (108),
dans laquelle chaque bras à ventouse (118, 119) présente un premier segment (130, 132) et un deuxième segment (131, 133), dans laquelle le premier segment (130, 132) de chaque bras à ventouse (118, 119) est fixé de manière à pouvoir tourner autour d'un premier axe (A1') associé, qui s'étend de manière perpendiculaire par rapport au plan central longitudinal (L),
dans laquelle le premier segment (130, 132) de chaque bras à ventouse (118, 119) présente une section, au niveau de laquelle le deuxième segment (131, 133) est fixé de manière à pouvoir tourner autour d'un deuxième axe (A2'', A2''') à emplacement variable s'étendant sensiblement de manière perpendiculaire par rapport au premier axe (A1'), dans lequel un dispositif d'aspiration (134) pour aspirer et maintenir un emballage blister (4, 6) est disposé au niveau du deuxième segment (131, 133),
dans lequel les bras à ventouse (118, 119) sont configurés et pilotés de telle manière que le déplacement des bras à ventouse (118, 119) de la première ou la deuxième position de réception à la première ou la deuxième position de dépôt et inversement est un déplacement combiné qui se compose au moins d'un premier déplacement par rotation du premier segment (130, 132) et du deuxième segment (131, 133) autour du premier axe (A1') et d'un deuxième déplacement par rotation du deuxième segment (131, 133) autour du deuxième axe (A2" , A2'''),
dans laquelle les bras à ventouse (118, 119) sont configurés et pilotés de telle manière que les emballages blister (4, 6) sont aspirés dans la position de réception (28) par les dispositifs d'aspiration (134) du premier et du deuxième bras à ventouse (118, 119) au niveau d'une surface place et sont déposés vers le haut avec la surface plane au niveau de la première et de la deuxième position de dépôt (122, 123),
dans laquelle la position de réception (28) est disposée dans la zone du plan central longitudinal (L) et la première et la deuxième position de dépôt (122, 123) sont disposées de manière décalée vers l'extérieur par rapport au plan central longitudinal (L),
dans laquelle le deuxième axe (A2'') du premier bras à ventouse (118) est disposé de telle manière que le deuxième axe (A2'') du premier bras à ventouse (118) se déplace pendant le premier déplacement par rotation du premier segment (130) du premier bras à ventouse (118) dans un premier plan (E1') qui coupe la première position de dépôt (122) ou sa projection latérale en une première ligne rectiligne (L1') qui est décalée latéralement par rapport au centre (M1') de la première position de dépôt (122), et dans laquelle le deuxième axe (A2''') du deuxième bras à ventouse (119) est disposé de telle manière que le deuxième axe (A2''') du deuxième bras à ventouse (119) se déplace au cours du premier déplacement par rotation du premier segment (132) du deuxième bras à ventouse (119) dans un deuxième plan (E2') qui coupe la deuxième position de dépôt (123) ou sa projection latérale en une deuxième ligne rectiligne (L2'), qui est décalée latéralement par rapport au centre (M2') de la deuxième position de dépôt (123).

7. Unité de transfert (108) selon la revendication 6, **caractérisée en ce que** les bras à ventouse (118, 119) sont configurés et pilotés de telle manière que les emballages blister (4, 6) sont reçus depuis le haut au niveau de la position de réception (28) par les dispositifs d'aspiration (134) du premier et du deuxième bras à ventouse (118, 119) et sont déposés également depuis le haut dans la première et la deuxième position de dépôt (122, 123).

8. Unité de transfert (108) selon la revendication 6 ou 7, **caractérisée en ce que** le deuxième segment (131, 133) du premier et du deuxième bras à ventouse (118, 119) est pivoté vers l'intérieur dans la première ou la deuxième position de réception respectivement par rapport au plan central longitudinal (L), et **en ce que** le deuxième segment (131, 133) du premier ou du deuxième bras à ventouse (118, 119) est pivoté vers l'extérieur dans la première ou la deuxième position de dépôt respectivement par rapport au plan central longitudinal (L).

9. Unité de transfert (108) selon l'une quelconque des revendications 6 à 8, **caractérisée en ce que** les deuxièmes segments (131, 133) et ainsi les emballages blister (4, 6) maintenus au niveau des dispositifs d'aspiration (134) exécutent un déplacement par rotation autour du deuxième axe (A2'', A2''') de sensiblement 180° quand les bras à ventouse (118, 119) se déplacent de la première ou la deuxième position de réception à la première ou la deuxième position de dépôt ou inversement.

10. Unité de transfert (108) selon l'une quelconque des revendications 6 à 9, **caractérisée en ce que** les premiers segments (130, 132) exécutent un déplacement par rotation autour du premier axe (A1') de 60° à 180°, de manière préférée de 120° à 180° quand les bras à ventouse (118, 119) se déplacent de la première ou la deuxième position de réception à la première ou la deuxième position de dépôt ou inversement.

11. Unité de transfert (14, 108) selon l'une quelconque des revendications précédentes, **caractérisée en ce que** le premier et le deuxième bras à ventouse (24, 25 ; 118, 119) sont pilotés de telle manière que le premier et le deuxième bras à ventouse (24, 25 ; 118, 119) exécutent des déplacements par pivotement en va-et-vient opposés.

12. Unité de transfert (14, 108) selon l'une quelconque des revendications précédentes, **caractérisée en ce que** les bras à ventouse (24, 25 ; 118, 119) sont montés de manière à pouvoir être coulissés en parallèle par rapport au premier axe (A1 ; A1').

13. Unité de transfert (14, 108) selon l'une quelconque des revendications précédentes, **caractérisée en ce que** le dispositif d'aspiration (34 ; 134) de chaque bras à ventouse (24, 25 ; 118, 119) comprend au moins une tête d'aspiration (36 ; 136) qui est fixée au niveau du deuxième segment (31, 33 ; 131, 133) au moyen d'au moins un bras de support (38 ; 138).

14. Unité de transfert (14, 108) selon la revendication 13, **caractérisée en ce que** l'au moins un bras de support (38 ; 138) est fixé de manière rigide au niveau du deuxième segment (31, 33 ; 131, 133).

15. Unité de transfert (14, 108) selon la revendication 13 ou 14, **caractérisée en ce que** l'au moins un bras de support (38 ; 138) dépasse de manière oblique vers le bas du deuxième segment (31, 33 ; 131, 133) dans la première ou la deuxième position de réception et dans la première ou la deuxième position de dépôt.

16. Procédé pour transférer des emballages blister (4, 6) d'une première et d'une deuxième position de réception (22, 23) à une position de dépôt (26) commune au moyen d'une unité de transfert (14), avec des étapes suivantes :
- de fourniture d'un premier et d'un deuxième emballage blister (4, 6) dans une première et une deuxième position de réception (22, 23), dans lequel les emballages blister (4, 6) sont disposés côte à côte dans la première et la deuxième position de réception (22, 23) en une rangée qui s'étend de manière transversale par rapport à un plan central longitudinal (L) de l'unité de transfert (14),
- de réception du premier emballage blister (4) dans la première position de réception (22), de déplacement du premier emballage blister (4) et de dépôt du premier emballage blister (4) dans la position de dépôt (26), dans lequel le premier emballage blister (4) est déposé depuis le haut dans la position de dépôt (26), dans lequel le premier emballage blister (4) est disposé de manière décalée vers l'extérieur dans la première position de réception (22) par rapport au plan central longitudinal (L), et dans lequel le premier emballage blister (4) est déposé, dans la position de dépôt (26) en comparaison avec la première position de réception (22), par rotation de 180° autour de son point central et
- de réception du deuxième emballage blister (6) dans la deuxième position de réception (23), de déplacement du deuxième emballage blister (6) et de dépôt du deuxième emballage blister (6) dans la position de dépôt (26), dans lequel le deuxième emballage blister (6) est déposé depuis le haut dans la position de dépôt (26), dans lequel le deuxième emballage blister (6) est disposé de manière décalée vers l'extérieur dans la deuxième position de réception (23) par rapport au plan central longitudinal (L), et dans lequel le deuxième emballage blister (6) est déposé, dans la position de dépôt (26) en comparaison avec la deuxième position de réception (23), par rotation de 180° autour de son point central.

17. Procédé selon la revendication 16, **caractérisé en ce que** les emballages blister (4, 6) sont reçus depuis le haut au niveau de la première et de la deuxième position de réception (22, 23), et que les emballages blister (4, 6) sont disposés vers le haut respectivement par le même côté dans la première et la deuxième position de réception (22, 23) et dans la position de dépôt (26).

18. Procédé selon la revendication 16 ou 17, **caractérisé en ce que** la position de dépôt (26) est disposée dans la zone du plan central longitudinal (L), et que le premier et le deuxième emballage blister (4, 6) réalisent un décalage latéral opposé de manière transversale par rapport au plan central longitudinal (L) au cours du déplacement de la première et la deuxième position de réception (22, 23) à la position de dépôt (26).

19. Procédé pour transférer des emballages blister (4, 6) d'une position de réception (28) commune à une première et une deuxième position de dépôt (122, 123) au moyen d'une unité de transfert (108), avec des étapes suivantes :
- de fourniture d'un premier emballage blister (4) dans la position de réception (28),
- de réception du premier emballage blister (4) dans la position de réception (28), de déplacement du premier emballage blister (4) et de dépôt du premier emballage blister (4) dans la première position de dépôt (122), dans lequel le premier emballage blister (4) est déposé depuis le haut dans la première position de dépôt (122), dans lequel le premier emballage blister (4) est disposé de manière décalée vers l'extérieur dans la première position de dépôt (122) par rapport à un plan central longitudinal (L) de l'unité de transfert (108), et dans lequel le premier emballage blister (4) est déposé, dans la première position de dépôt (122) en comparaison avec la position de réception (28), par rotation de 180° autour de son point central,
- de fourniture du deuxième emballage blister (6) dans la position de réception (28) et
- de réception du deuxième emballage blister (6) dans la position de réception (28), de déplacement du deuxième emballage blister (6) et de dépôt du deuxième emballage blister (6) dans la deuxième position de dépôt (123), dans lequel le deuxième emballage blister (6) est déposé depuis le haut dans la deuxième position de dépôt (123), dans lequel le deuxième emballage blister (6) est disposé de manière décalée vers l'extérieur dans la deuxième position de dépôt (123) par rapport au plan central longitudinal (L), et dans lequel le deuxième emballage blister (6) est déposé, dans la deuxième position de dépôt (123) en comparaison avec la position de réception (28), par rotation de 180° autour de son point central, et dans lequel les emballages blister (4, 6) sont disposés côte à côte dans la première et la deuxième position de dépôt (122, 123) en une rangée qui s'étend de manière transversale par rapport au plan central longitudinal (L).

20. Procédé selon la revendication 19, **caractérisé en ce que** les emballages blister (4, 6) sont reçus depuis le haut au niveau de la position de réception (28), et **en ce que** les emballages blister (4, 6) sont disposés vers le haut respectivement par le même côté dans la position de réception (28) et dans la première et la deuxième position de dépôt (122, 123).

21. Procédé selon la revendication 19 ou 20, **caractérisé en ce que** la position de réception (28) est disposée dans la zone du plan central longitudinal (L), et que le premier et le deuxième emballage blister (4, 6) réalisent un décalage latéral opposé de manière transversale par rapport au plan central longitudinal (L) au cours du déplacement de la position de réception (28) à la première et la deuxième position de dépôt (122, 123).
